# EUROPEAN PATENT APPLICATION

(11) **EP 4 852 529 A1**
(43) Date of publication of application: **09.12.2026**
(21) Application number: 24937361.4
(22) Date of filing: 29.04.2024
(51) Int. Cl.: H04W 52/02

(54) **METHOD AND APPARATUS FOR WIRELESS COMMUNICATION**

(71) Applicant: Quectel Wireless Solutions Co., Ltd., Shanghai 201601 (CN)
(72) Inventor: LYU, Ling, Shanghai 201601 (CN); ZHAO, Zheng, Shanghai 201601 (CN)
(74) Representative: Shieldmark
(86) International application number: PCT/CN2024/090574
(87) International publication number: WO 2025/227311

(57) **Abstract**

Provided are a method and an apparatus for wireless communication. The method includes: sending, by a first terminal device, a first request, where the first request is used to request a first SIB of a first cell; and receiving, by the first terminal device, the first SIB and/or configuration information of the first SIB, where the first cell is a serving cell corresponding to the first terminal device, and the first SIB includes a SIB1 of the first cell.

## Description

### TECHNICAL FIELD

The present application relates to the field of communication technologies, and more specifically, to a method and an apparatus for wireless communication.

### BACKGROUND

In order to serve a terminal device, a network device usually sends a system information block (system information block, SIB) periodically. However, in a scenario in which the terminal device has no demand or no terminal device is camped on a cell, periodic transmission of the SIB by the network device leads to significant energy waste. Therefore, how to implement on-demand transmission of the SIB to achieve network energy saving has become a technical problem needing to be solved urgently.

### SUMMARY

The present application provides a method and an apparatus for wireless communication. Various aspects of embodiments of the present application are described below.

According to a first aspect, a method for wireless communication is provided, including: sending, by a first terminal device, a first request, where the first request is used to request a first SIB of a first cell; and receiving, by the first terminal device, the first SIB and/or configuration information of the first SIB, where the first cell is a serving cell corresponding to the first terminal device, and the first SIB includes a SIB1 of the first cell.

According to a second aspect, a method for wireless communication is provided, including: receiving, by a first network device corresponding to a first cell, a first request sent by a first terminal device, or receiving a second request sent by a second network device corresponding to a second cell, where the first request is used to request a first SIB of the first cell, and the second request is determined based on the first request; and sending, by the first network device, the first SIB and/or configuration information of the first SIB to the first terminal device, where the first cell is a serving cell corresponding to the first terminal device, and the first SIB includes a SIB1 of the first cell.

According to a third aspect, a method for wireless communication is provided, including: receiving, by a second network device corresponding to a second cell, a first request sent by a first terminal device, where the first request is used to request a first SIB of the first cell; and sending, by the second network device, configuration information of the first SIB to the first terminal device, where the first cell is a serving cell corresponding to the first terminal device, and the first SIB includes a SIB1 of the first cell.

According to a fourth aspect, a method for wireless communication is provided, including: receiving, by a second terminal device, a first request sent by a first terminal device, where the first request is used to request a first SIB of a first cell; and sending, by the second terminal device, configuration information of the first SIB to the first terminal device, where the first cell is a serving cell corresponding to the first terminal device, and the first SIB includes a SIB1 of the first cell.

According to a fifth aspect, an apparatus for wireless communication is provided, where the apparatus is a first terminal device, and the apparatus includes: a transmitting unit, sending a first request, where the first request is used to request a first SIB of a first cell; and a receiving unit, receiving the first SIB and/or configuration information of the first SIB, where the first cell is a serving cell corresponding to the first terminal device, and the first SIB includes a SIB1 of the first cell.

According to a sixth aspect, an apparatus for wireless communication is provided, where the apparatus is a first network device corresponding to a first cell, and the apparatus includes: a receiving unit, receiving a first request sent by a first terminal device, or receiving a second request sent by a second network device corresponding to a second cell, where the first request is used to request a first SIB of the first cell, and the second request is determined based on the first request; and a transmitting unit, sending the first SIB and/or configuration information of the first SIB to the first terminal device, where the first cell is a serving cell corresponding to the first terminal device, and the first SIB includes a SIB1 of the first cell.

According to a seventh aspect, an apparatus for wireless communication is provided, where the apparatus is a second network device corresponding to a second cell, and the apparatus includes: a receiving unit, receiving a first request sent by a first terminal device, where the first request is used to request a first SIB of a first cell; and a transmitting unit, sending configuration information of the first SIB to the first terminal device, where the first cell is a serving cell corresponding to the first terminal device, and the first SIB includes a SIB1 of the first cell.

According to an eighth aspect, an apparatus for wireless communication is provided, where the apparatus is a second terminal device, and the apparatus includes: a receiving unit, receiving a first request sent by a first terminal device, where the first request is used to request a first SIB of a first cell; and a transmitting unit, sending configuration information of the first SIB to the first terminal device, where the first cell is a serving cell corresponding to the first terminal device, and the first SIB includes a SIB1 of the first cell.

According to a ninth aspect, a communication apparatus is provided, including a memory and a processor, where the memory is configured to store a program, and the processor is configured to call the program in the memory to execute the method according to any one of the first aspect to the fourth aspect.

According to a tenth aspect, an apparatus is provided, including a processor configured to invoke a program from a memory to execute a method according to any one of the first aspect to the fourth aspect.

According to an eleventh aspect, a chip is provided, including a processor configured to invoke a program from a memory to cause a device on which the chip is installed to execute a method according to any one of the first aspect to the fourth aspect.

According to a twelfth aspect, a computer-readable storage medium is provided, where a program is stored on the computer-readable storage medium, and the program causes a computer to execute a method according to any one of the first aspect to the fourth aspect.

According to a thirteenth aspect, a computer program product is provided, including a program, where the program causes a computer to execute a method according to any one of the first aspect to the fourth aspect.

According to a fourteenth aspect, a computer program is provided, where the computer program causes a computer to execute a method according to any one of the first aspect to the fourth aspect.

The first terminal device in embodiments of the present application receives the first SIB of the first cell only after sending the first request for requesting the first SIB. The first SIB includes a SIB1. It may be learned that the SIB1 received by the first terminal device is not sent periodically, but is sent according to a request of the first terminal device. Therefore, a network device corresponding to the first cell may send the SIB1 as required, thereby implementing network energy saving.

### BRIEF DESCRIPTION OF THE DRAWINGS

FIG. 1 shows a wireless communication system to which embodiments of the present application are applied.
FIG. 2 is a schematic flowchart of a method for wireless communication according to an embodiment of the present application.
FIG. 3 is a possible schematic diagram in which the method shown in FIG. 2 is applied to a single-cell scenario.
FIG. 4 is a possible schematic flowchart of the scenario shown in FIG. 3.
FIG. 5 is another possible schematic flowchart of the scenario shown in FIG. 3.
FIG. 6 is a possible schematic diagram in which the method shown in FIG. 2 is applied to a multi-cell scenario.
FIG. 7 is a possible schematic flowchart of the scenario shown in FIG. 6.
FIG. 8 is a schematic diagram of a possible implementation of the method shown in FIG. 2.
FIG. 9 is a schematic diagram of a structure of an apparatus for wireless communication according to an embodiment of the present application.
FIG. 10 is a schematic diagram of a structure of another apparatus for wireless communication according to an embodiment of the present application.
FIG. 11 is a schematic diagram of a structure of still another apparatus for wireless communication according to an embodiment of the present application.
FIG. 12 is a schematic diagram of a structure of still another apparatus for wireless communication according to an embodiment of the present application.
FIG. 13 is a schematic diagram of a structure of a communication apparatus according to an embodiment of the present application.

### DETAILED DESCRIPTION OF THE EMBODIMENTS

The following describes the technical solutions in embodiments of the present application with reference to the accompanying drawings in embodiments of the present application. Apparently, the described embodiments are some rather than all of embodiments of the present application. For embodiments of the present application, all other embodiments obtained by a person of ordinary skill in the art without creative efforts fall within the protection scope of the present application.

Embodiments of the present application may be applied to various communication systems. For example, embodiments of the present application may be applied to a global system for mobile communications (global system of mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an advanced long term evolution (advanced long term evolution, LTE-A) system, a new radio (new radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a universal mobile telecommunication system (universal mobile telecommunication system, UMTS), a wireless local area network (wireless local area networks, WLAN), a wireless fidelity (wireless fidelity, WiFi) system, and a 5th-generation (5th-generation, 5G) system. Embodiments of the present application may be further applied to another communication system, for example, a 6th-generation (6th-generation, 6G) mobile communication system, or a future communication system such as a satellite (satellite) communication system.

Conventional communication systems support a limited quantity of connections and are easy to implement. However, with development of communication technologies, a communication system may support not only conventional cellular communication but also one or more other types of communication. For example, the communication system may support one or more types of the following communication: device-to-device (device to device, D2D) communication, machine-to-machine (machine to machine, M2M) communication, machine type communication (machine type communication, MTC), enhanced machine type communication (enhanced MTC, eMTC), vehicle-to-vehicle (vehicle to vehicle, V2V) communication, vehicle-to-everything (vehicle to everything, V2X) communication, and the like. Embodiments of the present application may also be applied to a communication system that supports the foregoing communication manners.

The communication system in embodiments of the present application may be applied to a carrier aggregation (carrier aggregation, CA) scenario, a dual connectivity (dual connectivity, DC) scenario, or a standalone (standalone, SA) networking scenario.

The communication system in embodiments of the present application may be applied to an unlicensed spectrum. The unlicensed spectrum may also be considered as a shared spectrum. Alternatively, the communication system in embodiments of the present application may be applied to a licensed spectrum. The licensed spectrum may also be considered as a dedicated spectrum.

Embodiments of the present application may be applied to a non-terrestrial network (non-terrestrial network, NTN) system. In an example, the NTN system may be a 4G-based NTN system, an NR-based NTN system, an NTN system based on an internet of things (internet of things, IoT), or an NTN system based on a narrow band internet of things (narrow band internet of things, NB-IoT).

The communication system may include one or more terminal devices. The terminal device in embodiments of the present application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communication device, a user agent, a user apparatus, or the like.

In some embodiments, the terminal device may be a station (STATION, ST) in a WLAN. In some embodiments, the terminal device may be a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device, or another processing device connected to a wireless modem, a vehicle-mounted device, a wearable device, a terminal device in a next-generation communication system (such as an NR system), a terminal device in a future evolved public land mobile network (public land mobile network, PLMN), or the like.

In some embodiments, the terminal device may be a device that provides a user with voice and/or data connectivity. For example, the terminal device may be a handheld device, a vehicle-mounted device, or the like that has a wireless connection function. In some specific examples, the terminal device may be a mobile phone (mobile phone), a Pad (Pad), a notebook computer, a laptop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like.

In some embodiments, the terminal device may be deployed on land. For example, the terminal device may be deployed indoors or outdoors. In some embodiments, the terminal device may be deployed on water, for example, on a ship. In some embodiments, the terminal device may be deployed in the air, for example, on an airplane, a balloon, and a satellite.

In addition to the terminal device, the communication system may further include one or more network devices. The network device in embodiments of the present application may be a device for communicating with the terminal device. The network device may also be referred to as an access network device or a radio access network device. The network device may be, for example, a base station. The network device in embodiments of the present application may be a radio access network (radio access network, RAN) node (or device) that connects the terminal device to a wireless network. The base station may broadly cover various names in the following, or may be replaced with the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode (MeNB), a secondary eNode (SeNB), a multistandard radio (MSR) node, a home base station, a network controller, an access node, a wireless node, an access point (access point, AP), a transmission node, a transceiver node, a baseband unit (base band unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communication module, a modem, or a chip disposed in the device or the apparatus described above. Alternatively, the base station may be a mobile switching center, a device that functions as a base station in D2D, V2X, or M2M communication, a network-side device in a 6G network, a device that functions as a base station in a future communication system, or the like. The base station may support networks with a same access technology or different access technologies. A specific technology and a specific device used by the network device are not limited in embodiments of the present application.

The base station may be fixed or mobile. For example, a helicopter or an uncrewed aerial vehicle may be configured to function as a mobile base station, and one or more cells may move according to a location of the mobile base station. In another example, a helicopter or an uncrewed aerial vehicle may be configured to function as a device in communication with another base station.

In some deployments, the network device in embodiments of the present application may be a CU or a DU, or the network device includes a CU and a DU. The gNB may further include an AAU.

As an example rather than limitation, in embodiments of the present application, the network device may have a mobile characteristic, for example, the network device may be a movable device. In some embodiments of the present application, the network device may be a satellite or a balloon station. In some embodiments of the present application, the network device may alternatively be a base station arranged on land, water, or the like.

In embodiments of the present application, the network device may provide a service for a cell. The terminal device communicates with the network device by using a transmission resource (for example, a frequency resource or a spectrum resource) used by the cell. The cell may be a cell corresponding to the network device (for example, a base station). The cell may belong to a macro station or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are suitable for providing a high-rate data transmission service.

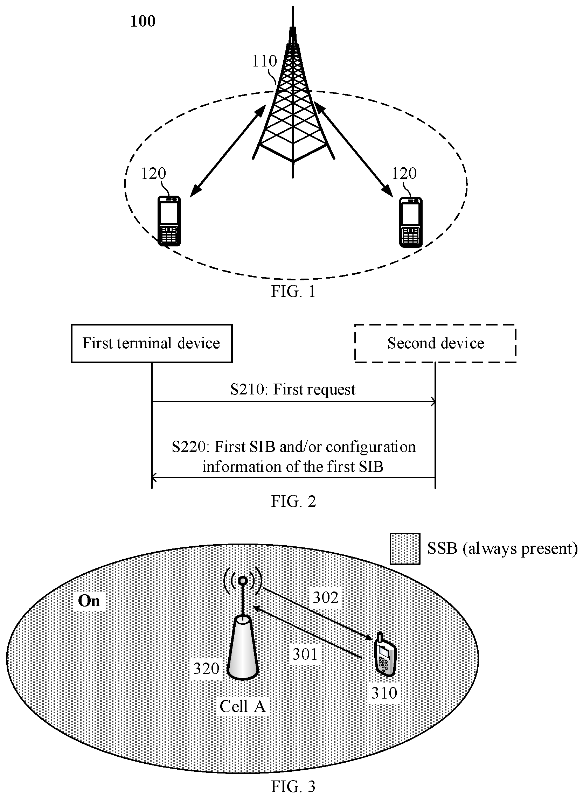

Exemplarily, FIG. 1 is a schematic diagram of an architecture of a communication system according to an embodiment of the present application. As shown in FIG. 1, the communication system 100 may include a network device 110, and the network device 110 may be a device that communicates with a terminal device 120 (or referred to as a communication terminal or a terminal). The network device 110 may provide communication coverage in a specific geographic area, and may communicate with a terminal device located in the coverage area.

FIG. 1 exemplarily shows one network device and two terminal devices. In some embodiments of the present application, the communication system 100 may include a plurality of network devices, and another quantity of terminal devices may be included within coverage of each network device. This is not limited herein.

In embodiments of the present application, the wireless communication systems shown in FIG. 1 may further include another network entity such as a mobility management entity (mobility management entity, MME) or an access and mobility management function (access and mobility management function, AMF). This is not limited in embodiments of the present application.

It should be understood that a device having a communication function in a network/system in embodiments of the present application may be referred to as a communication device. The communication system 100 shown in FIG. 1 is used as an example. The communication device may include a network device 110 and a terminal device 120 that have a communication function. The network device 110 and the terminal device 120 may be specific devices described above. Details are not described herein again. The communication device may further include another device in the communication system 100, such as a network controller or a mobility management entity, which is not limited in embodiments of the present application.

For ease of understanding, some related technical knowledge related to embodiments of the present application is first described. The following related technologies, as optional solutions, may be randomly combined with the technical solutions of embodiments of the present application, all of which fall within the protection scope of embodiments of the present application. Embodiments of the present application include at least a part of the following content.

With development of mobile communication technologies, a new radio evolved system (for example, a 5G system) improves a transmission rate of data by using a plurality of technologies, to meet a transmission requirement of a large amount of data such as high-definition videos and virtual reality. The plurality of technologies are, for example, a large-scale (multiple-input multiple-output, MIMO) technology, a non-orthogonal multiple access technology, a simultaneous co-frequency full-duplex communication technology, a novel modulation technology, a novel coding technology, and a higher-order modulation technology. With these technologies, a peak rate can reach a Gbit/s-level standard.

In an example, a latency level of an air interface needs to be about 1 ms to meet real-time application such as autonomous driving and telemedicine.

In an example, an ultra-large network capacity can provide a connection capability of hundreds of billions of devices, thereby meeting an internet of things communication requirement.

In an example, spectral efficiency of an NR system is over 10 times higher than that of an LTE system. With continuous wide area coverage and high mobility, a user-perceived rate can reach 100 Mbit/s. Therefore, traffic density and connection number density are greatly increased.

In addition, improvement of system collaboration and intelligence levels further improves network flexibility. System collaboration can be manifested as multi-user, multi-point, multi-antenna, and multi-intake cooperative networking. Based on collaboration and intelligence, automatic adjustment can be flexibly performed between networks.

However, in a communication system, power consumption of a network device (for example, a base station devices) is usually high. To reduce power consumption of the base station device, system information needs to be optimized. For ease of understanding, the following uses system information of NR as an example for description.

The system information of NR can be classified into master information block (master information block, MIB) messages and some SIB messages. A MIB message is usually sent on a broadcast channel (broadcast channel, BCH). A transmission period of the MIB is 80 ms. The MIB may be repeatedly transmitted within a period of 80 ms. In addition, the MIB message further includes a parameter required by the terminal device to obtain a SIB1 message from a cell.

The SIB1 message may also be referred to as a SIB type 1 message. The SIB1 is transmitted on a downlink shared channel (downlink-shared channel, DL-SCH) at a period of 160 ms. Within 160 ms, the SIB may be further repeatedly sent with a variable transmission repetition period. A default repetition transmission period for the SIB1 is 20 ms. An actual repetition transmission period depends on network implementation. For example, for a multiplexing mode 1 of a synchronization signal block (synchronization signal block, SSB) and a control resource set (control resource set, CORESET), the repetition transmission period of the SIB1 is 20 ms. For another example, for a multiplexing mode 2/3 of the SSB and the CORESET, the repetition transmission period of the SIB1 is the same as a period of the SSB.

In this embodiment of the present application, the SSB may further represent a synchronization signal/physical broadcast channel block (synchronization signal and PBCH block).

The SIB1 may carry key information required by the terminal device to access a cell, for example, a random access parameter. The SIB1 may further include information related to availability and scheduling of another SIB, for example, mapping from the another SIB to a system information (system information, SI) message, periodicity, SI window size, and the like. The SIB1 may further indicate whether one or more SIBs are provided only on demand. In this case, the SIB1 may further provide a physical random access channel (physical random access channel, PRACH) configuration required by the terminal device, so as to request SI required by the terminal device. The SIB1 further includes radio resource configuration information common to all terminal devices and cell barring information applied to unified access control.

When the SIB1 includes information related to another SIB, the another SIB message may be broadcast periodically or provided on demand. If the another SIB is provided on demand, the SIB1 may include information for the terminal device to execute a system information (system information, SI) request.

A SIB message (another SIB) other than the SIB1 may be included in the SI message. This message may also be transmitted on a DL-SCH. Each SI message may be periodically transmitted within a time domain window (referred to as an SI window). Only SIBs with a same period can be mapped to a same SI message. Each SI message is sent within a time domain window that occurs periodically (All SI messages may have SI windows of a same length). Each SI message is associated with an SI window, and SI windows of different SI messages do not overlap. That is, only a corresponding SI message is sent in one SI window. In addition, a system may send the SI message a plurality of times within the SI window.

The system information of NR is used above as an example to describe a plurality of SIB messages. A network device (for example, a gNB) may periodically send a SIB1 used for initial access, and schedule another SIB of a terminal device in an idle (idle)/inactive (inactive, which may also be referred to as non-active) mode. The network device always performs transmission even if there is no demand from the terminal device or no terminal device resides in a cell. It may be learned that, in some scenarios, the network device periodically sends the SIB1, which may cause a relatively large energy waste.

To achieve network energy saving, unnecessary SIB1 transmissions and associated PRACH monitoring need to be reduced. Therefore, an on-demand SIB1 of the terminal device in the idle state/inactive state needs to be studied, so as to provide more opportunities for the network device to be in a sleep mode.

However, how to implement on-demand transmission of the SIB1 to save energy of the network device is a technical difficulty worthy of study.

It should be noted that an energy waste problem caused by periodic transmission of the SIB1 by the network device mentioned above is merely an example, and embodiments of the present application can be applied to any type of communication scenario in which a communication device wastes energy due to periodic transmission of messages.

To resolve the foregoing problem, embodiments of the present application propose a method for wireless communication. Through this method, the first terminal device receives the first SIB only after sending the first request for requesting the first SIB, so as to access the first cell. On a network side, the network device does not need to send the first SIB periodically, but sends it on demand based on a request of the first terminal device. It may be learned that a related device on the network side can be in the sleep mode or inactive mode for a longer period of time, thereby achieving effective energy saving on the network side.

For ease of understanding, the following describes in detail the method provided in embodiments of the present application with reference to FIG. 2. In FIG. 2, a description is given from the perspective of interaction between a first terminal device and a second device. A dashed box indicates that the second device is not a specific device but an optional communication device.

Refer to FIG. 2. Step S210: Sending, by the first terminal device, a first request.

The first terminal device may be any terminal device that requests a first SIB, which is not limited herein. In some embodiments, the first terminal device may be a terminal device in an idle state or an inactive state. For example, the first terminal device is a UE in an idle/inactive mode.

In some embodiments, the first terminal device is a device that supports a network energy saving (network energy saving, NES) function.

A serving cell corresponding to the first terminal device is a first cell. In other words, a cell in which the first terminal device is located is the first cell, or a network device corresponding to the first cell may provide a service for the first terminal device.

In some embodiments, there is only the first cell near an area in which the first terminal device is located, that is, the first terminal device is in a single-cell scenario. FIG. 3 is used as an example. A terminal device 310 is the first terminal device in the single-cell scenario, and the first cell is cell A (Cell#A) in FIG. 3. In FIG. 3, a network device 320 corresponding to the first cell may provide a service for the terminal device 310.

In some embodiments, a plurality of cells are included near an area in which the first terminal device is located, and the plurality of cells include the first cell. That is, the plurality of cells including the first cell are associated with the first terminal device. Therefore, the first terminal device is in a multi-cell scenario. In this scenario, at least some cells in the plurality of cells may separately provide a service for the first terminal device by using a corresponding network device. For example, the first terminal device may receive information sent through broadcasting by at least some network devices corresponding to the at least some cells.

In an example, the plurality of cells associated with the first terminal device are in one area. The area is, for example, a specific geographic area.

In an example, the plurality of cells associated with the first terminal device are in one tracking area (tracking area, TA). The plurality of cells may correspond to a same tracking area code (tracking area code, TAC) or tracking area identity (tracking area identity, TAI).

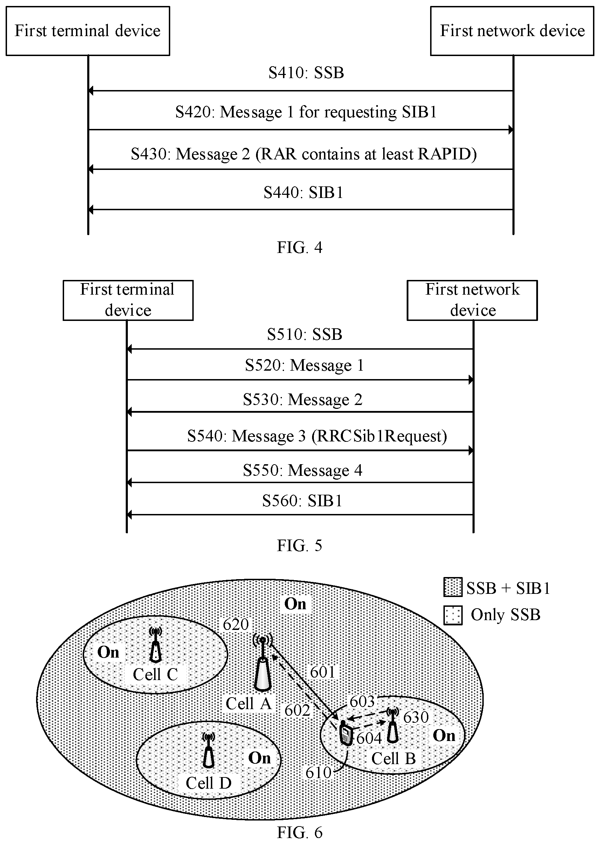

The following uses FIG. 6 as an example to describe a multi-cell scenario. Referring to FIG. 6, a terminal device 610 is a first terminal device in a multi-cell scenario. A plurality of cells associated with the first terminal device are cell A, cell B (Cell #B), cell C (Cell #C), and cell D (Cell #D). Cell B in which the first terminal device is located is a first cell.

A network device corresponding to the first cell is a first network device. The first cell may provide a service for the first terminal device through the corresponding first network device. The first network device may be any network device described above, which is not limited herein.

In this embodiment of the present application, sending/receiving performed by any cell may be represented as sending/receiving performed by a network device corresponding to the cell, or sending/receiving performed by the cell by using a corresponding network device.

In some embodiments, the first cell may be a cell in which energy saving needs to be implemented on a network side. The cell may be a cell of any size described above. Energy saving that needs to be implemented on the network side may include energy saving of a network device, and may also include energy saving of a core network. Optionally, the first cell may be a NES cell, or may be a network energy saving cell having a similar function.

In an example, a PBCH or MIB in an SSB usually provides a parameter set and a search space for SIB1 transmission, and a corresponding CORESET for SIB1 scheduling. In the CORESET, the terminal device may monitor SIB1 scheduling according to an indication of a special system information radio network temporary identifier (SI radio network temporary identifier, SI-RNTI). However, in a related technical solution of on-demand SIB1 (first cell), the PBCH/MIB does not provide a parameter set for SIB1 transmission and/or a SIB1 configuration, and does not provide a search space or a corresponding CORESET for SIB1 scheduling, thereby achieving energy saving on the network side.

For example, for the first terminal device in the idle/inactive mode, a cell that sends the SIB1 on demand may be a NES cell.

In an example, in a multi-cell scenario, a plurality of cells may include one or more NES cells and at least one non-NES cell. The one or more NES cells include the first cell. Compared with the NES cells, the non-NES cell has a lower energy saving requirement. Optionally, the non-NES cell may also be considered as a conventional cell.

In an example, the non-NES cell may assist the first terminal device in obtaining a related SIB of the first cell. When the non-NES cell is used by the first terminal device to obtain the first SIB, the non-NES cell may also be referred to as a secondary cell or an anchor cell (anchor cell).

For example, the plurality of cells may include one anchor cell and a plurality of non-anchor cells (that is, NES cells). For example, the plurality of cells shown in FIG. 6 include one anchor cell (cell A) and a plurality of non-anchor cells (cell B, cell C, and cell D).

Optionally, the second cell may be any other cell in a same tracking area as the first cell.

Optionally, the second cell may be a non-NES cell (anchor cell) in a plurality of cells associated with the first terminal device.

Optionally, when the second cell is used as a secondary cell, the second cell may be a neighboring cell around the first cell or a secondary cell on which carrier aggregation may be performed. In an example, in a multi-cell scenario, the first terminal device may request the first SIB by using the secondary cell.

In an example, the second cell may provide related information of the first SIB for the terminal device in the idle/inactive state. The information is usually provided in system information of the first cell, or in dedicated signaling, so that the terminal device in the idle/inactive state receives the information. In this embodiment of the present application, system information sent by the second cell may include information required by the first cell (NES cell) to request the first SIB.

In some embodiments, the first terminal device may send the first request to the second device, as shown in FIG. 2. The second device is any one of a plurality of devices that can communicate with the first terminal device.

In an example, the second device may be a first network device corresponding to the first cell. The first terminal device may communicate with the first network device by using a resource of the first cell. For example, the second device may be the network device 320 in FIG. 3 or a network device 630 in FIG. 6.

Optionally, the first terminal device may directly send the first request to the first network device. For example, the terminal device 310 (the first terminal device) in FIG. 3 may send the first request to the network device 320 (the first network device) through an uplink 301. For another example, the terminal device 610 in FIG. 6 may send the first request to the network device 630 through an uplink 604.

In an example, the first network device may periodically send an SSB, where the SSB does not include configuration information of the SIB1.

In an example, the first network device may further monitor the first request, to respond in a timely manner. That is, even if the first cell is in the sleep mode, the first request sent by the terminal device is monitored.

In an example, the first network device may receive the first request sent by the first terminal device. The following exemplarily describes communication between the first terminal device and the first network device as an example with reference to FIG. 4 and FIG. 5.

In an example, the second device may be a network device corresponding to another cell associated with the first cell. The another cell associated with the first cell includes the second cell. The first terminal device may communicate with a second network device corresponding to the second cell by using a resource of the second cell. The second network device may be any one of the network devices describe above. For example, the second device may be the network device 620 in FIG. 6.

Optionally, the first terminal device may send the first request to the second network device, to request the second cell to assist the first terminal device in obtaining the first SIB. For example, in FIG. 6, the terminal device 610 may send the first request to the network device 620 through an uplink 602.

Optionally, the second network device may send the second request to the first network device, to trigger the first cell to respond to the first request of the first terminal device. The second request may be determined based on the first request. For example, the second request may include the first request, or may be the first request.

In an example, the first network device may send the configuration information of the first SIB to the second network device. The configuration information of the first SIB is specifically described below with reference to step S220.

For example, the configuration information of the first SIB may be used by the second network device to feed back the first request of the first terminal device, or may be used by the second network device to determine resource configuration information of the first request. For example, after receiving the first request, the second network device may directly send the configuration information of the first SIB to the first terminal device. For another example, after receiving the configuration information of the first SIB, the second network device may configure a transmission resource of the first request, so that the terminal device in the idle state or in the inactive state in the first cell sends the first request when accessing the first cell.

For example, when the first cell determines that there is a non-NES cell around the first cell, the first network device may send the configuration information of the first SIB to a network device corresponding to the non-NES cell, so that the non-NES cell assists the first terminal device in requesting the first SIB.

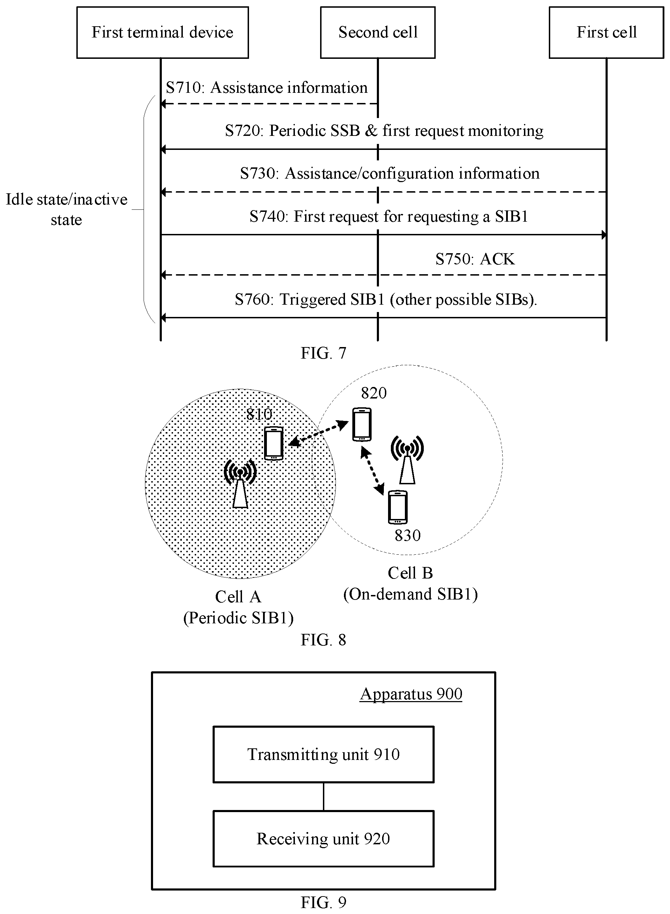

In an example, the second device may include a first network device and a second network device. The first terminal device may send the first request with assistance of the second network device, and receive the first SIB/configuration information of the first SIB sent by the first network device or the second network device. The following exemplarily describes communication between the first terminal device and two cells as an example with reference to FIG. 7.

In an example, the second device may alternatively be another terminal device other than the first terminal device, for example, a second terminal device. The second terminal device may be any terminal device around the first terminal device. For example, for the first request that is sent by the first terminal device and that is used to trigger the first cell to send an on-demand SIB, another terminal device may also undertake an auxiliary function of sending the first SIB.

A UE is used as an example. A plurality of UEs always exist around one UE, and therefore a potential for collaboration of many UEs is also provided. That is, a plurality of UEs may help activate one of the UEs to more reliably receive/send data from/to a network, thereby improving overall spectral efficiency, system capacity, and UE experience. The network may assist UE cooperation and provide more possible transmission paths from the network to a target UE, thereby achieving better coverage. In a highly dense network, an access network may further schedule users who benefit from UE cooperation, taking into account factors such as creation of cooperative groups, signaling transmission and sharing, privacy restrictions, battery consumption, and collaboration incentives. For example, a plurality of UEs in a short distance may be grouped into a UE cooperation group (cooperation group, CG), which is exemplarily described subsequently with reference to FIG. 8.

In some implementations, the first terminal device and a plurality of terminal devices may form one UE cooperation group. The UE cooperation group may include at least one coordinating UE (cooperating UE, CUE) and one target UE (target UE, TUE). Optionally, the CUE may be the second terminal device in the non-NES cell, and the TUE may be the first terminal device.

Optionally, the cell in which the second terminal device is located is a non-NES cell, so that the second terminal device assists the first terminal device in obtaining the first SIB or the configuration information of the first SIB. When the second terminal device is in a non-NES cell, the second terminal device may store or receive SIB related information of a neighboring NES cell, and the first terminal device may obtain SIB information of the NES cell from the second terminal device.

In an example, after receiving the first request, the second terminal device may send the configuration information of the first SIB to the first terminal device. After obtaining the configuration information of the first SIB, the first terminal device may further send the information to a third terminal device in the first cell.

In an example, the second terminal device may further send the first requested resource configuration information to the first terminal device. The resource configuration information of the first request is, for example, a transmission time/frequency resource of the first request.

In an example, the second terminal device may further serve as a relay for communication between the first terminal device and a network device. That is, a CUE in the cooperation group may effectively act as a UE-to-Network relay for a TUE.

In an example, in the cooperation group, the second terminal device serving as a CUE may expand the cooperation group based on a sensing result. For example, the CUE may select from a group of active or idle devices near the TUE, and as long as these devices are willing to cooperate or sense other terminal devices through perception, these devices may be pulled into the cooperation group to expand the collaboration group.

In an example, the second terminal device may forward cooperation information to the first terminal device to help the first terminal device receive data. For example, the CUE may forward the cooperation information to the TUE to help the TUE decode a data packet received during a multicast phase.

In an example, association information or resource configuration information sent by the second terminal device to the first terminal device depends on a collaboration strategy. That is, during a cooperation phase, information sent by the second terminal device depends on the collaboration strategy. The cooperation strategy includes amplification and forwarding, decoding and forwarding, compression and forwarding, (frequency-selective) soft forwarding, joint reception, and the like of related information of the first SIB.

In an example, during a sidelink communication process (including a grantable spectrum or a shared spectrum), the first terminal device may also obtain related information of the first SIB from the second terminal device.

In some embodiments, the first terminal device may simultaneously send the first request to a plurality of second devices. For example, because the first terminal device is in the idle state or the inactive state, when the first terminal device confirms resource configuration information of the first request in the first cell and the second cell, the first terminal device may send the first request to both the first cell and the second cell, and both the first cell and the second cell provide feedback.

The foregoing describes transmission of the first request from the first terminal device to a plurality of second devices, where the first request is used to request the first SIB of the first cell.

In some embodiments, the first SIB is one or more SIBs sent by the first network device according to a requirement of the terminal device. It may be learned that the first network device does not need to periodically send the first SIB, but sends the first SIB on demand, to implement energy saving. For example, the first network device does not need to send the SIB1 based on a period of 160 ms or a repetition transmission period within 160 ms, but sends the SIB1 based on the first request.

The first SIB includes the SIB1 of the first cell. The network device may send the SIB1 based on a request of the terminal device, thereby reducing unnecessary transmission of the SIB1. In an example, the first SIB may be the SIB1 of the first cell, or may be all SIBs of the first cell, or may be some of SIBs that are in the first cell and that include the SIB1.

In some implementations, when the first cell is a NES cell, the sent SSB may not include a parameter set of the SIB1, to reduce transmission overheads. However, a part of configuration for cell random access is provided in the SIB1. When the first terminal device discovers the first cell and expects to access the first cell, because the received SSB has no parameter of the SIB1, the first terminal device needs to request the first SIB.

In some embodiments, the first SIB is a SIB required by the first terminal device, and may also be referred to as an on-demand SIB. Correspondingly, the SIB1 included in the first SIB may also be referred to as an on-demand SIB1, and the first request may also be referred to as an on-demand SIB1 request.

In some embodiments, the first cell may periodically send the SSB, but does not periodically send the SIB1. Compared with the first cell serving as a non-anchor cell, the second cell serving as an anchor cell may be a cell that sends the SSB and the SIB1 and provides information related to an on-demand SIB1 process. For example, in FIG. 3, cell A in service (on) always sends an SSB (always on) periodically. However, the SSB does not contain the SIB1. For another example, in FIG. 6, cell B, the cell C, and the cell D that are in service all send only the SSB (SSB only), but cell A sends the SSB and the SIB1.

In some embodiments, when the first cell periodically sends the SSB, a transmission period of the SSB may be fixed or variable. For example, in a NES cell, SSB transmission may support periodic transmission with a fixed period length and periodic transmission with a variable period length.

In an example, the transmission period of the SSB may be dynamically adjusted based on a cell load status. That is, if the SSB transmission period varies, the SSB may be dynamically sent based on cell load. For example, if the cell load is light, the SSB transmission period may be relatively long. If the cell load is heavy, the SSB transmission period is relatively short.

In an example, the SSB transmission period may be a combination of long and short periods. For example, the SSB may be sent in alternating long and short periods: long period, short period, long period, short period. In this scenario, the first cell can choose to send SIB information in a long SSB period and send only SSB information in a short SSB period. It may be learned that the first cell does not carry information about the SIB1 in each SSB, but sends the information about the SIB1 irregularly or relatively periodically, so that energy saving can be implemented to some extent.

It should be noted that, in the first cell, SSB transmission also supports on-demand transmission. For example, if the SSB transmission period remains unchanged, when the SSB is sent on demand, the SSB definitely carries SIB information. In this scenario, that the first terminal device requests the SSB of the first cell may be equivalent to that the first terminal device requests the first SIB of the first cell.

The first request may be implemented in a plurality of manners. That is, the first terminal device may send, in a plurality of manners, information for requesting the first SIB. Optionally, the first request may include one or more of the following: an uplink wake-up signal (wake uplink signal, WUS), on-demand information/on-demand signaling for requesting the first SIB, a first sequence for requesting the first SIB, and a preamble (preamble) index (index) associated with the first SIB.

In some embodiments, the first request may be a WUS, or may be referred to as a UL WUS. The WUS may be used to wake up the first cell and the first network device that are in the sleep mode, or may request the first network device not in the sleep mode to send the first SIB. For example, after the first cell detects the WUS sent by the first terminal device, the first network device may send the on-demand SIB1.

In an example, for a single-cell scenario, because the SSB sent by the first cell does not carry information about the SIB1, the first terminal device needs to send a WUS to trigger the first cell to send the first SIB, where the first SIB may include the information about the SIB1.

In an example, for a multi-cell scenario, whether the first cell in which the first terminal device is located is a NES cell or a non-NES cell needs to be considered. If the first cell is a NES cell, after reading an SSB of a cell, the first terminal device may send a WUS to a NES cell and/or a non-NES cell in a plurality of cells. If the first cell is a non-NES cell, the first terminal device may receive the SIB information.

Optionally, in a multi-cell scenario, if the first cell separately sends a WUS to a NES cell and a non-NES cell, designs of WUSs corresponding to the NES cell and the non-NES cell may be different, or may be the same.

In some embodiments, the first request may be on-demand (on-demand) information/on-demand signaling for requesting the first SIB. The on-demand information/on-demand signaling may also be used to wake up the first cell and the first network device, or request the first SIB from the first cell. For example, after the first cell detects the on-demand information/on-demand signaling sent by the first terminal device, the first network device may send the on-demand SIB1.

In an example, the on-demand signaling may be control signaling or data signaling, which is not limited herein.

In an example, for a single-cell scenario, because the SSB sent by the first cell does not carry information about the SIB1, the first terminal device needs to send the on-demand information/on-demand signaling to trigger the first cell to send the SIB1 or the configuration information of the SIB1.

In an example, for a multi-cell scenario, if the first cell in which the first terminal device is located is a NES cell, after reading an SSB of a cell, the first terminal device may send the on-demand information/on-demand signaling to the NES cell and/or the non-NES cell in the plurality of cells.

In some embodiments, the first request may be a first sequence for requesting the first SIB. The first sequence may be a separate sequence or a separate signal. That is, when sending the first sequence, the first terminal device does not need to share a resource in another communication process. For example, after the first cell detects the first sequence sent by the first terminal device, the first network device may send the on-demand SIB1.

In some embodiments, the first request may be a preamble (preamble) index (index) related to the first SIB. In an example, the preamble index sent by the first terminal device for random access may be a configured specified index. When the first terminal device selects the specified index, it may indicate that the first terminal device requests the network device to send the first SIB. In an implementation, when the first terminal device requests, based on the specified preamble index, a base station to deliver the SIB1, the base station may respond to the first terminal device by delivering a response message of a random access procedure. For example, a message 2 (Msg2) used by the base station to respond to random access includes a random access preamble identifier (random access preamble identifier, RAPID). When the RAPID is consistent with the preamble index sent by the first terminal device, it may be considered that the base station has received the request of the first terminal device for the first SIB.

In some embodiments, the first request may include at least two of the foregoing implementations, to wake up the first cell in time. For example, the first request may include an uplink wake-up signal and on-demand signaling for requesting the first SIB. For another example, when the first request is a wake-up signal, the signal may be a known sequence.

In some embodiments, the first terminal device may send the first request in a plurality of manners. The plurality of manners may include a plurality of uplink resources. Optionally, the first terminal device may send the first request alone, or may send the first request together with another uplink channel/message.

In an example, the first request may be sent by using an uplink channel of the first terminal device and/or a resource indicated by resource configuration information of the first request. For example, when the first request is sent alone, a corresponding transmission resource needs to be configured or pre-configured for the first request. After receiving the resource configuration information of the first request, the first terminal device may send the first request based on the resource configuration information.

In an example, the resource configuration information of the first request is information for configuring the transmission resource of the first request. The resource configuration information may be information for pre-configuring the transmission resource, or may be information for dynamically configuring the transmission resource.

In some implementations, the resource configuration information of the first request may be determined based on assistance information sent by the first cell and/or the second cell. The assistance information is used by the first terminal device to request the first SIB including the SIB1, and may also be referred to as SIB1 information. It may be learned that, when located in a NES cell, the first terminal device may not only receive assistance information sent by the NES cell, but also receive assistance information sent by a non-NES cell. For example, in FIG. 6, the terminal device 610 may receive the assistance information through a downlink 601 or 603.

In an example, when the first terminal device detects the assistance information from the second cell, the first terminal device does not need to access the second cell. The assistance information may provide the first terminal device with information (including the resource configuration information of the first request) related to a request process of the first SIB of the first cell. The first request sent by the first terminal device is configured to be sent in the first cell and the second cell.

In an example, the assistance information sent by the first cell and/or the second cell may include the resource configuration information of the first request, and the first terminal device may determine the transmission resource of the first request based on the assistance information.

In an example, the assistance information sent by the first cell and/or the second cell may include the configuration information of the first SIB, and the configuration information of the first SIB may be used to determine the resource configuration information of the first request.

In an example, the second cell may determine the resource configuration information of the first request based on the configuration information of the first SIB sent by the first cell. That is, the configuration information of the first SIB is used by the second network device to determine the resource configuration information of the first request. For example, after receiving the configuration information of the first SIB, the second network device may determine a time-frequency resource for transmitting the first request, and notify the first terminal device.

In an example, the first network device may send the resource configuration information of the first request and/or the configuration information of the first SIB to the second network device, so that the second cell determines the assistance information.

In an example, the assistance information of the second cell may be configured for one NES cell or a plurality of NES cells.

In some embodiments, when the assistance information is sent by the second cell serving as an anchor cell, the second cell may provide assistance information of a plurality of SIBs of a plurality of surrounding NES cells to assist terminal devices in the plurality of NES cells to request the SIB1. In this scenario, a plurality of network devices corresponding to the plurality of NES cells may send configuration information of the SIBs to the second network device. For example, the second network device may receive the configuration information of the first SIB sent by the first network device, and determine, based on the information, assistance information for the first terminal device to send the first request.

In an example, in a multi-cell scenario, the second cell may integrate configuration information of a plurality of SIBs and send the configuration information to the first terminal device in a broadcast or dedicated signaling manner. The first terminal device may send the first request to the first cell based on the configuration information of the plurality of SIBs.

For example, the SIB1 of the first cell may be multiplexed with a SIB1 of the second cell and/or another non-NES cell.

For example, the configuration information of the plurality of SIBs of the plurality of NES cells may reuse signaling sent by the second cell, or the configuration information of the plurality of SIBs may be separately carried on different downlink channels. For example, when the second cell sends configuration information of one or more SIBs of one or more NESs, SIB1s of different NES cells may be multiplexed together and sent through common signaling (such as SSB). Terminal devices in different cells can identify, through index numbers, configuration information required by their cells. For another example, when the second cell sends configuration information of one or more SIBs of one or more NESs, the configuration information of the one or more SIBs may be carried through separate physical downlink shared channels (physical downlink shared channel, PDSCH).

In an example, the second network device may receive resource configuration information of a plurality of first requests and configuration information of a plurality of SIBs that are sent by a plurality of network devices. A plurality of cells corresponding to the plurality of network devices are NES cells, and the plurality of network devices include the first network device. The resource configuration information of the plurality of first requests and the configuration information of the plurality of SIBs are used by the second network device to separately determine assistance information of the plurality of network devices.

For example, the plurality of NES cells may send the configured resource configuration information of the first request to the second cell. If a configuration resource of a particular NES cell changes, the second cell needs to be notified of the change in time. For example, if a resource of the first request configured by the first cell for the first terminal device changes, a base station corresponding to the first cell may notify a base station corresponding to the second cell of the change of the resource of the first request. The base station corresponding to the second cell may store the change, and the resource configuration sent to the first terminal device next time is a new resource configuration.

In an example, the assistance information sent by the second cell as an anchor cell may include some or all of the following information: a list of selectable non-anchor cells (non-anchor cells) and a cell index and/or a physical cell identifier (physical cell identifier, PCI); a power control parameter when the first request (for example, a WUS) is transmitted on the NES cell; whether the anchor cell sends SIB1 information of the non-anchor cell; a PRACH configuration; a CORESET/random access response (random access response, RAR) of the non-anchor cell that can be received by the UE or a search space set configuration of the SIB1; or a transmission time/frequency resource of the first request.

For example, based on the assistance information of the second cell, the first terminal device already knows, during initial access, a cell list of nearby anchor cells and non-anchor cells (for example, within a coverage area of a same TAC) or an anchor cell list near a non-anchor cell of the first terminal device. For example, the first terminal device may receive the assistance information provided by the anchor cell through SSB information or other public signaling or dedicated signaling from the anchor cell. Generally, configurations and resources for the first request are the same between the first cell and the second cell. However, when configuration information of the two cells is different, the first terminal device needs to perform proper selection for cell access.

In an implementation, the resource configuration information of the first request may include first configuration information sent by the first cell and second configuration information sent by the second cell. When the first configuration information is different from the second configuration information, the first terminal device may send the first request based on the first configuration information. That is, if the resource configuration differs, the first terminal device uses a configuration of the first cell in which the first terminal device is located.

In another implementation, the resource configuration information of the first request may include first configuration information sent by the first cell and second configuration information sent by the second cell. When the first configuration information is different from the second configuration information, the first terminal device may select, from the first configuration information and the second configuration information, configuration information for sending the first request. In other words, the first terminal device may select the first configuration information to send the first request, or may select the second configuration information to send the first request.

For example, the first terminal device may select appropriate configuration information based on a service type. The service type may include a priority, an urgency degree, and the like of a service, which is not limited herein. For example, if a service of the first terminal device is urgent and a service time is not long, the first terminal device may directly access the first cell based on the configuration information of the second cell.

In some embodiments, the first request carries a small amount of information, and occupies a few resources. In a multi-cell scenario, different NES cells may configure a same resource for the first request. For example, in cell areas covered by a same TAC, all NES cells configure or reserve a same resource for the first request. For example, a plurality of first requests of a plurality of NES cells are at a same time-frequency resource location.

In some embodiments, a plurality of terminal devices may separately send the first request, and a system may configure one resource pool (first resource pool) for the plurality of terminal devices or network devices to select a configurable resource of the first request. In this case, the resource configuration information of the first request is determined based on the first resource pool. Optionally, as long as there is a resource in the first resource pool, first requests of different terminal devices may be all received.

In some embodiments, different terminal devices may simultaneously send the first request. Although a resource of the first request is configured in advance, resources of the network device are limited. Therefore, the first network device or the second network device may set a buffer to receive on-demand SIB requests of a plurality of terminal devices. In an example, the buffer may store first requests of different terminal devices according to a "first-come, first-served" principle.

In some embodiments, the resource configuration information of the first request is further related to a type or a transmission manner of the first request.

In an example, when the first request is a WUS sent alone, the WUS may be a sequence. In this scenario, a transmit end and a receive end may agree upon content and a time-frequency location of the sequence in advance, to facilitate wake-up.

In an example, the resource configuration information of first requests may further be carried in SSBs sent by different cells. The different cells may include the first cell, or may include an anchor cell in the foregoing plurality of cells, or may include any cell in the plurality of cells. For example, when the first request is a WUS, configuration information of the WUS may be carried and sent in an SSB of the second cell.

In an implementation, in a single-cell scenario, the first terminal device may determine a transmission manner of the first request based on whether an SSB sent by the first cell carries the resource configuration information of the first request.

For example, the first terminal device may receive a first SSB sent by the first cell. When the first SSB does not include the resource configuration information of the first request, the first terminal device sends the first request through a PRACH; or when the first SSB includes the resource configuration information of the first request, the first terminal device sends the first request through a PRACH or the resource indicated by the resource configuration information. For example, when sending the first request based on the resource configuration information, the first terminal device may send a separate signal or sequence on the resource indicated by the resource configuration information.

In some embodiments, when the first terminal device sends the first request through an uplink resource, a plurality of uplink (uplink, UL) channels may be considered. Optionally, the first request may be sent through one or more of a PRACH, a physical uplink control channel (physical uplink control channel, PUCCH), and a physical uplink shared channel (physical uplink shared channel, PUSCH). For example, the first request may be carried in these uplink channels. For another example, the first request may share a same resource with these uplink channels for transmission.

In an example, the first request may be sent together with a message in a random access procedure. For example, when the first request is sent through a PRACH, the first request may be carried in an uplink message of the random access procedure. Considering different types of random access procedures, the uplink message may include one or more of the following: message 1 (Msg1), message A (MsgA), and message 3 (Msg3). For example, when the first terminal device sends a WUS to the base station, the WUS may be sent alone or together with Msg1/MsgA. With reference to FIG. 4 and FIG. 5, the following uses examples in which the first SIB is requested based on the message 1 and the first SIB is requested based on the message 3 for exemplary description.

In an example, when the first terminal device sends the first request through a PRACH, the PRACH may be dedicatedly designed for the first request of the first terminal device in the idle/inactive mode. For example, uplink synchronization may not be performed on the PRACH. That is, synchronization may not be established between the PRACH and an uplink.

In an example, the PRACH used for the first request may be configured on the first cell (a non-anchor cell) and/or the second cell (anchor cell). That is, the resource configuration information of the first request may indicate random access resources of the first cell and/or the second cell.

Optionally, when the resource configuration information of the first request indicates a resource of the second cell, the first request may be monitored only by the second cell, or may be monitored by the two cells together when the first cell and the second cell are synchronized.

In some embodiments, whether the first request is sent alone or the first request is sent together with another message, a process related to the first request may share a first resource with a random access procedure. That is, the first request may be sent by using a common resource of the random access procedure.

Optionally, the process related to the first request may include a transmission process of UL/DL (downlink, DL) signals associated with the request of the first SIB. Transmission resources of these UL/DL signals need to be configured.

Optionally, the common resource of the random access procedure may include a common resource that is on the first cell and that is used by the terminal device to perform the random access procedure, or may be a common resource that is on the foregoing plurality of cells and that is used by the terminal device to perform the random access procedure.

In an example, the common resource may include a common random access channel (random access channel, RACH) resource. That is, a resource and a configuration used for sending a DL/UL signal associated with the first request at least partially share a common resource of a RACH.

In an example, considering that the first request is sent together with the RACH, at least a common resource of the RACH may be shared.

In an example, the first request is sent through a common resource of the random access procedure of the first cell. The common resource of the random access procedure of the first cell may include all or part of resources used for random access of the first cell.

In an example, the first request is sent through a common resource of a random access procedure of the second cell (anchor cell) in the plurality of cells. The common resource of the random access procedure of the second cell may include all or part of resources used for random access of the second cell.

In an example, in a multi-cell scenario, when a PRACH of the second cell (anchor cell) is associated with a plurality of non-anchor cells, different indexes can be created for the plurality of non-anchor cells to help the terminal device determine which cell is accessed through a PRACH configuration. It may be learned the foregoing description that the assistance information provided by the second cell may include a list of a plurality of non-anchor cells and cell indexes.

In an example, according to an indication of the resource configuration information of the first request, the first request may be sent through one or more random access channel occasions (random access channel occasion, RO). The RO may also represent a PRACH occasion (PRACH occasion). That is, the resource configuration information of the first request may indicate one or more ROs for sending the first request. For example, the first request may be sent through a first RO indicated by the resource configuration information.

In some implementations, the one or more ROs used for the first request may be additionally configured ROs. That is, the one or more ROs are distinguished from an RO used for random access. An RO configured for a conventional terminal device may be referred to as a default RO, and an additional RO configured for a terminal device supporting a NES function may be referred to as a NES RO, so as to meet requirements of both random access and network energy saving. For example, a base station corresponding to the anchor cell may configure a default RO for a conventional UE and configure an additional NES RO for a UE supporting the NES function. Therefore, the one or more ROs used by the first terminal device to send the first request belong to NES ROs.

In an example, the default RO may be a relatively sparse RO, and the NES RO may be a relatively dense RO. For example, the NES RO may be configured through parameter configuration to have different RO periods from those of the default RO.

In an example, one or more ROs may be configured by reusing some parameters in a conventional PRACH configuration, or may be configured by using a separate PRACH configuration. That is, a dedicated PRACH configuration may be set for the NES RO.

In an example, one or more ROs may be used for the first terminal device to send the first request. For example, in a scenario with a short RO period, transmission requirements of the first request and the random access channel may be met by configuring a sufficient quantity of ROs.

In an example, configuration of one or more ROs may be indicated by downlink control information (downlink control information, DCI) or a medium access control (medium access control) control element (control element, CE). The DCI may be a configured grant-DCI (configured grant-DCI, CG-DCI). It may be learned that the resource configuration information of the first request may include indication information of the DCI or the MAC CE. When configurations of one or more ROs are indicated by DCI or a MAC-CE, alignment needs to be performed between the first terminal device and the network device, to meet an adjustment requirement of an RO configuration start point.

Optionally, a time domain location of one or more ROs may be determined based on a receiving time of indication information of these configurations. That is, the time domain location of the one or more ROs is determined according to a receiving time of the resource configuration information.

Optionally, the time domain location of the one or more ROs is determined based on the receiving time of the indication information of these configurations and a first time parameter. That is, the time domain location of the one or more ROs is determined based on a receiving time of the resource configuration information and the first time parameter.

In an example, the first time parameter may be a time period T. The time period T may be a predefined time period, or may be directly indicated in a plurality of preconfigured candidates. For example, the time domain location of the one or more ROs may be located after a time period T starting from a receiving time of (CG-) DCI or a MAC-CE indicating the NES RO.

In an example, the first time parameter may be a time period associated with a mode or a service type. For example, the time domain location of the one or more ROs may be located after an associated period starting from a reception time point of a (CG-) DCI or a MAC-CE.

In an example, when one or more configured ROs are used up, all terminal devices can use only the default RO. All terminal devices may include a conventional terminal device and a terminal device supporting the NES function. In the case of large access delay or congestion, a quantity of default ROs may be insufficient. In this case, the base station may provide an additional NES RO for the terminal device supporting the NES function. Alternatively, the terminal device supporting the NES function may send also a request to the base station as required.

Still refer to FIG. 2. Step S220: Receiving, by the first terminal device, the first SIB and/or configuration information of the first SIB.

In some embodiments, the first SIB may be a system information block directly received by the first terminal device, and the configuration information of the first SIB may be used by the first terminal device to receive the first SIB. That is, the first terminal device may receive the first SIB, and may also receive the configuration information of the first SIB.

In an example, the first terminal device may receive the first SIB sent by the first network device. For example, in FIG. 3, the terminal device 310 may receive, through the downlink 302, the first SIB (for example, the on-demand SIB1) sent by the network device 320. For another example, in FIG. 6, the terminal device 610 may receive, through the downlink 603, the first SIB sent by the network device 630.

In an example, the first terminal device may receive the configuration information of the first SIB sent by the first network device. For example, in FIG. 6, the terminal device 610 may receive, through the downlink 601, the configuration information of the first SIB sent by the network device 620.

In an example, the first terminal device may receive the configuration information of the first SIB sent by the second terminal device. For example, in FIG. 8, a terminal device 820 may receive, through a cooperation group or a sidelink, the configuration information of the first SIB sent by a terminal device 810.

In some embodiments, when the first terminal device simultaneously sends the first request to a plurality of devices, the first terminal device may receive configuration information that is of the first SIB and that is separately fed back by the plurality of devices. In this scenario, the first terminal device may select the configuration information of the SIB based on first information. For example, when the first terminal device receives the configuration information of the first SIB sent by the first cell and the configuration information of the second SIB sent by the second cell, the first terminal device selects, based on the first information, configuration information of the first SIB used for accessing the first cell.

In an example, the first information may include one or more of the following: a service level of the first terminal device; a service time of the first terminal device; and a measurement result of the first terminal device.

Optionally, the service level is related to a service type and a service priority of the first terminal device.

Optionally, the service time is related to a service urgency degree, a service requirement, or a user requirement of the first terminal device.

Optionally, the measurement result includes parameters such as a reference signal received power (reference signal received power, RSRP).

In some embodiments, the configuration information of the first SIB may include a parameter set and a search space for SIB1 transmission, and a corresponding CORESET for SIB1 scheduling. For example, the first terminal device may receive a PBCH/MIB including configuration information, and implement reception of the first SIB.

In some embodiments, the configuration information of the first SIB may be used to determine related information of the first cell about the first request. The related information about the first request may include information related to a request process of the first SIB. The first SIB includes the SIB1, and the information may also include information related to an on-demand SIB1 process, that is, information related to a process in which the first terminal device requests the on-demand SIB1. For example, the information related to the on-demand SIB1 process may include a RACH configuration that triggers the on-demand SIB1.

In an example, in a multi-cell scenario, the configuration information of the first SIB may be sent by the first network device, may be sent by the second network device, or may be sent by the second terminal device, which is not limited herein. For example, in FIG. 6, the terminal device may receive, through the downlink 603, the configuration information of the first SIB sent by the network device 630, or may receive, through the downlink 601, the configuration information of the first SIB sent by the network device 620.

Optionally, when the second device is the first network device, if the first network device receives the first request from the first terminal device, the first network device may send the first SIB or the configuration information of the first SIB. For example, after receiving the uplink wake-up signal from the first terminal device, the base station may send the first SIB or the configuration information of the first SIB by using a broadcast message. The configuration information of the first SIB includes configuration information of the SIB1.

In an example, the configuration information of the SIB1 received by the first terminal device may come from a NES cell or a non-NES cell.

In some embodiments, the first SIB that is sent by the first network device through broadcasting needs to be sent within an SSB period. In this scenario, if the first terminal device has just missed an SSB period, access waiting is required. In a next SSB period, the first terminal device may receive the first SIB. For example, when the first SIB is a SIB1, the first terminal device may wait for a PBCH/MIB sent in a next SSB period. As described above, the PBCH/MIB may provide a parameter set and a search space for SIB1 transmission, and a corresponding CORESET for SIB1 scheduling.

In an example, if the first request of the first terminal device is sent together with the random access procedure, the first network device may send SIB1 information specific to the first network device, namely, the configuration information of the first SIB, to the first terminal device by using broadcast information or dedicated information.

In some embodiments, the first terminal device may monitor the first SIB and/or the configuration information of the first SIB in a first time window. For example, the first terminal device may receive, in the first time window, the first SIB and/or the configuration information of the first SIB that are sent by the first network device. For another example, the first terminal device may receive, in the first time window, the configuration information of the first SIB sent by the second network device. For another example, the first terminal device may receive, in the first time window, the configuration information of the first SIB sent by the second terminal device.

The SIB1 is used as an example. A time parameter of the first time window may be determined based on a transmission time of the first request. For example, the first terminal device may expect to receive the SIB1 in a SIB1 monitoring occasion with a length of L milliseconds (or L timeslots) after the first request is sent. That is, a transmission time of the SIB1 is the first time window (detection window) whose duration is L milliseconds.

Still using the SIB1 as an example, the time parameter of the first time window may be determined based on a length (T1) of the buffer. For example, the first terminal device may expect to receive the SIB1 in a SIB1 monitoring occasion with a length of T1 after the first request is sent. For another example, the first terminal device may expect to receive the SIB1 in a SIB1 monitoring occasion with a length of L+T1 after the first request is sent. That is, the transmission time of the SIB1 is the first time window (detection window) whose duration is L+T1.

In an example, the network device may explicitly notify the first terminal device of the time parameter of the first time window, so that the first terminal device may detect the first SIB and/or the configuration information of the first SIB on an appropriate occasion.

With reference to FIG. 2, FIG. 3, and FIG. 6, the foregoing describes the method in which the first terminal device sends the first request to request the first SIB, and application of the method in a single-cell scenario and a multi-cell scenario.

In the single-cell scenario shown in FIG. 3, the terminal device 310 is the first terminal device, and cell A is the first cell. In a scenario in which cell A provide a service, the network device 320 corresponding to cell A always periodically sends an SSB, and sends an on-demand SIB only after receiving a request from the terminal device 310.

In the multi-cell scenario shown in FIG. 6, the terminal device 610 is the first terminal device, cell B in which the terminal device is located is the first cell, and cell A is the second cell. In this scenario, the terminal device 610 may obtain configurations of a UL WUS and a SIB1 from a cell other than cell B.

As shown in FIG. 6, there are two types of cells in the area. One type is anchor cell (anchor cell), such as cell A, and the other type is non-anchor cell (NES cell or on-demand SIB1 cell), such as cells B, C, and D. The anchor cell sends an SSB and a SIB1 periodically, and the non-anchor cell sends a SIB1 only upon request from the terminal device.

For ease of understanding, the following separately describes procedures in a single-cell scenario and a multi-cell scenario with reference to FIG. 4, FIG. 5, and FIG. 7.

FIG. 4 and FIG. 5 are schematic flowcharts in a single-cell scenario. FIG. 4 uses an on-demand SIB1 request based on a message 1 as an example, and FIG. 5 uses an on-demand SIB1 request based on a message 3 as an example. It should be noted that the methods shown in FIG. 4 and FIG. 5 may also be applied to a multi-cell scenario. In FIG. 4 and FIG. 5, the first terminal device may be a UE, and the first network device may be a gNB corresponding to a first cell.

Refer to FIG. 4. Step S410: Receiving, by the first terminal device, an SSB sent by the first network device. The SSB does not have the configuration information of a SIB1.

Step S420: Sending, by the first terminal device to the first network device, a message 1 for requesting the SIB1 (Msg1 to request SIB1). That is, the message 1 sent to the first network device carries a first request, to request the first network device to send the SIB1 message. Alternatively, the first terminal device may add the first request to a message A to be sent.

Step S430: After receiving the first request, adding, by the first network device, configuration information related to the SIB1 to a message 2. A RAR of the message 2 contains at least a RAPID (RAR contains at least RAPID).

Step S440: Delivering, by the first network device, deliver related information of the SIB1 through broadcasting.

Refer to FIG. 5. Step S510: Receiving, by the first terminal device, an SSB sent by the first network device. The SSB does not have the configuration information of a SIB1.

Step S520: Sending, by the first terminal device, a message 1 to the first network device.

Step S530: Sending, by the first network device, a message 2 to the first terminal device.

Step S540: Sending, by the first terminal device, a message 3 to the first network device. The first terminal device may add a first request (RRCSib1Request) to the message 3, to request the first network device to send a SIB1.

Step S550: After receiving the first request, adding, by the first network device, configuration information of the first SIB to a message 4.

Step S560: Delivering, by the first network device, related information of the SIB1 through broadcasting.

It should be understood that, in some scenarios, each of the message 1 and the message 3 may carry the first request. Regardless of the scenario, before initiating a SIB1 request process, a system needs to provide required information to the first terminal device (for example, a resource and a configuration for sending a UL-WUS).

FIG. 7 is a schematic flowchart of requesting an on-demand SIB1 in a multi-cell scenario. A first terminal device in FIG. 7 may be a UE in an idle state/inactive state, a first cell may be a NES cell, and a second cell may be an anchor cell. A dashed line indicates that the process is optional.

Refer to FIG. 7. Step S710: Sending, by the second cell, assistance information (assistance info) to the first terminal device through a second network device.

Step S720: Sending, by the first cell, a periodic SSB (periodic SSB), and performs first request monitoring (for example, WUS monitoring).

Step S730: Sending, by the first cell, assistance information or configuration information (config info) to the first terminal device through a first network device.

Step S740: Sending, by the first terminal device to the first network device, a first request (WUS requesting SIB1) for requesting a SIB1.

Step S750: Sending, by the first network device, a positive acknowledgment (acknowledgement, ACK) to the first terminal device.

Step S760: Sending, by the first network device, a triggered SIB1 or another SIB (triggered SIB1 (and possibly other SIBs)).

It may be learned from the foregoing description that the first terminal device may further obtain configuration information of a first SIB with assistance of another terminal device. For ease of understanding, the following gives an example description with reference to FIG. 8.

A scenario shown in FIG. 8 includes two cells: cell A that sends a periodic SIB1 and cell B that sends an on-demand SIB1. It may be learned that cell B is a NES cell, namely, the first cell. Cell A is a non-NES cell (conventional cell). Cell A has a terminal device 810, and cell B has a terminal device 820 and a terminal device 830.

As shown in FIG. 8, the terminal device 810, the terminal device 820, and the terminal device 830 may be used as a cooperation group. In the cooperation group, the terminal device 820 located in cell B is the first terminal device. (target UE), the terminal device 830 is a third terminal device, and the terminal device 810 located in cell A is the second terminal device (cooperating UE). The terminal device 810 in cell A stores SIB information or receives related information of a SIB1 of a neighboring NES cell (cell B). The terminal device 820 may obtain the SIB1 in the NES cell from the terminal device 810, and the terminal device 820 may also send the received related information of the SIB1 to the terminal device 830.

With reference to FIG. 3 to FIG. 8, the foregoing describes application examples of embodiments of the present application in a plurality of scenarios. Regardless of a single-cell scenario, a multi-cell scenario, or a cooperation group scenario, the first terminal device needs to determine whether the first cell in which the first terminal device is located is a NES cell. Optionally, the first terminal device may determine, based on second information, whether the first cell is a NES cell. When the first cell is a NES cell, the first terminal device may send the first request to the first cell and/or the second cell.

In some embodiments, the second information may include one or more of the following: whether an SSB sent by the first cell includes an indication indicating that the first cell is a NES cell; whether an MIB sent by the first cell includes an indication indicating that the first cell is a NES cell; whether an SSB or MIB sent by the first cell includes the configuration information of the first SIB; and load of the first cell.

In an example, the first terminal device may determine, by using an SSB or another DL signal (for example, a PDCCH-scheduled SIB1) sent by the first cell, whether the first cell is a NES cell. For example, a PBCH of the SSB may include an identifier of a NES cell. After receiving this identifier information, the first terminal device may clearly know that the accessed cell (that is, a cell in which the first terminal device is located) is a NES cell.

In an example, the first terminal device may determine, by using the MIB sent by the first cell, whether the first cell is a NES cell. For example, the MIS may include an identifier of a NES cell. After receiving this identifier information, the first terminal device may clearly know that the accessed cell (that is, a cell in which the first terminal device is located) is a NES cell.

In an example, when the SSB periodically sent by the first cell does not include the configuration information of the first SIB, the first terminal device may consider that the accessed cell is a NES cell.

In an example, whether the first cell is a NES cell is related to the load of the first cell. For example, to save energy, a network side may support on-demand SIB transmission, but at the same time, cell load needs to be considered. On-demand SIB transmission is applicable to medium-load scenarios. When a quantity of connected terminal devices increases, if a network schedules SIB1s based on a larger period, an access delay and a reserved resource pool size may be limited, resulting in negative impact. Therefore, when the load reaches a high level, the network may resume SIB1 transmission.

In an example, when the load of the first cell is greater than a first threshold, the first cell is switched from a NES cell to a non-NES cell.

Further, in a multi-cell scenario, the first terminal device further needs to determine whether a cell in which the first terminal device is located is a NES cell (on-demand SIB1 cell) or an anchor cell. It may be learned from the foregoing description that the anchor cell may provide configurations of the first request and the first SIB to a terminal device in a neighboring NES cell. To access a NES cell, the first terminal device needs to detect at least one anchor cell to obtain a related configuration of the NES cell.

In some embodiments, the second cell may provide identifiers of the anchor cell and the non-anchor cell in the PBCH of the SSB or the MIB. As described above, the assistance information provided by the second cell may include PCIs of a plurality of NES cells. After receiving the information, the first terminal device may clearly know whether the accessed cell is an anchor cell or a non-anchor cell. If the first terminal device is in a NES cell, the first terminal device may send the first request to a network device corresponding to the NES cell or a network device corresponding to the anchor cell, so as to obtain the first SIB.

In an example, in a multi-cell scenario including the second cell, the first terminal device may receive third information sent by the second cell. The third information may include identifier information of a plurality of cells. The first terminal device may perform cell access and cell reselection based on the identifier information. Optionally, the assistance information provided by the second cell may include the third information.

For example, when the first terminal device is in the idle state or the inactive state, the first terminal device needs to re-enter a connected state.

For example, when the first terminal device is in the connected state, cell handover or cell reselection may need to be performed. For example, if the first cell has no resources, cell reselection and handover are triggered. The first terminal device may directly reselect the second cell based on configuration information of the second cell. Therefore, a resource of the first cell may also be used as a condition for cell reselection or handover.

In an example, when the first terminal device needs to re-enter the connected state, the first terminal device may perform cell measurement and cell reselection based on strength of a received signal. For example, the first terminal device may select, based on currently received RSRPs of a plurality of cells (including an anchor cell and a non-anchor cell), a cell to camp on. It may be learned that the first terminal device may access a NES cell, or may access a non-NES cell.

In an example, the first terminal device may select, based on a result of cell measurement and reselection, a cell on which the first terminal device continues to camp.

Optionally, when the first terminal device receives resource configuration that is used by some cells in the plurality of cells for the first request, if the first terminal device chooses, based on the result of cell measurement reselection, to camp on the current NES cell, the first terminal device sends, to the NES cell or the anchor cell, the first request for requesting the first SIB. If the first terminal device chooses to camp on an anchor cell, the first terminal device sends a random access request to the anchor cell.

Optionally, if the first terminal device is in the connected state, the network device (for example, the base station) corresponding to the cell in which the first terminal device is located may further send the first requested resource configuration information through another signal, so that the first terminal device performs cell handover or reselection. The another signal is, for example, DCI that carries resource configuration information of a first request of a target cell in CORESET#0.

The foregoing describes the method embodiments of the present application in detail with reference to FIG. 1 to FIG. 8. The following describes in detail the apparatus embodiments of the present application with reference to FIG. 9 to FIG. 13. It should be understood that the description of the apparatus embodiments corresponds to the description of the method embodiments. Therefore, for parts that are not described in detail, one may refer to the foregoing method embodiments.

FIG. 9 is a schematic block diagram of an apparatus for wireless communication according to an embodiment of the present application. The apparatus 900 may be any terminal device described above. The apparatus 900 shown in FIG. 9 includes a transmitting unit 910 and a receiving unit 920.

The transmitting unit 910 may be configured to send a first request, where the first request is used to request a first SIB of a first cell, where the first cell is a serving cell corresponding to the first terminal device, and the first SIB includes a SIB1 of the first cell.

The receiving unit 920 may be configured to receive the first SIB and/or configuration information of the first SIB.

Optionally, the first request includes one or more of the following manners: an uplink wake-up signal; on-demand information/on-demand signaling for requesting the first SIB; a first sequence for requesting the first SIB; and a preamble index related to the first SIB.

Optionally, the apparatus 900 further includes a first determining unit, which may be configured to determine that the first cell is a NES cell. The transmitting unit 910 is further configured to send the first request to the first cell.

Optionally, the first cell is one of a plurality of cells, the plurality of cells further include a second cell, and the transmitting unit is further configured to send the first request to the second cell. The receiving unit is further configured to receive the configuration information of the first SIB sent by the first cell and/or the second cell.

Optionally, the plurality of cells include a plurality of NES cells and at least one non-NES cell, the second cell is the non-NES cell, and the plurality of NES cells include the first cell; and the plurality of NES cells respectively correspond to configuration information of a plurality of SIBs, and the configuration information of the plurality of SIBs reuses signaling sent by the second cell, or the configuration information of the plurality of SIBs is separately carried on different downlink channels.

Optionally, the apparatus 900 further includes a processing unit, when the first terminal device receives the configuration information of the first SIB sent by the first cell and the configuration information of the first SIB sent by the second cell, selecting, based on first information, configuration information of the first SIB used for accessing the first cell.

Optionally, the first information includes one or more of the following: a service level of the first terminal device; a service time of the first terminal device; and a measurement result of the first terminal device.

Optionally, the receiving unit 920 is further configured to receive third information sent by the second cell, where the third information includes identifier information of the plurality of cells, and the identifier information of the plurality of cells is used by the first terminal device to perform cell access and/or cell reselection.

Optionally, the transmitting unit 910 is further configured to send the first request to a second terminal device. The receiving unit is further configured to receive the configuration information of the first SIB sent by the second terminal device. A cell in which the second terminal device is located is a non-NES cell.

Optionally, the transmitting unit 910 is further configured to send the configuration information of the first SIB to a third terminal device located in the first cell.

Optionally, the apparatus 900 further includes a second determining unit, which may be configured to determine, according to second information, whether the first cell is a NES cell. The transmitting unit 910 is further configured to send the first request when the first cell is a NES cell.

Optionally, the second information includes one or more of the following: whether an SSB sent by the first cell includes an indication indicating that the first cell is a NES cell; whether an MIB sent by the first cell includes an indication indicating that the first cell is a NES cell; whether an SSB or MIB sent by the first cell includes the configuration information of the first SIB; and load of the first cell.

Optionally, the first request is sent by using an uplink channel of the first terminal device and/or a resource indicated by resource configuration information of the first request.

Optionally, the receiving unit 920 is further configured to receive a first SSB sent by the first cell. The transmitting unit 910 is further configured to: when the first SSB does not include the resource configuration information, send the first request by using a PRACH; or when the first SSB includes the resource configuration information, send the first request by using a PRACH or by using the resource indicated by the resource configuration information.

Optionally, when the first request is sent by using a common resource of a random access procedure, the resource configuration information indicates one or more random access channel occasions ROs for sending the first request.

Optionally, the first cell is one of the plurality of cells, the plurality of cells further include the second cell, and the resource configuration information is determined based on assistance information sent by the first cell and/or the second cell.

Optionally, the resource configuration information includes first configuration information sent by the first cell and second configuration information sent by the second cell, and the transmitting unit 910 is further configured to: when the first configuration information is different from the second configuration information, send the first request based on the first configuration information; or when the first configuration information is different from the second configuration information, select, from the first configuration information and the second configuration information based on a service type, configuration information for sending the first request.

Optionally, the receiving unit 920 is further configured to monitor the first SIB and/or the configuration information of the first SIB in a first time window, where a time parameter of the first time window is determined based on a transmission time of the first request.

Optionally, the first terminal device is in an idle state or an inactive state.

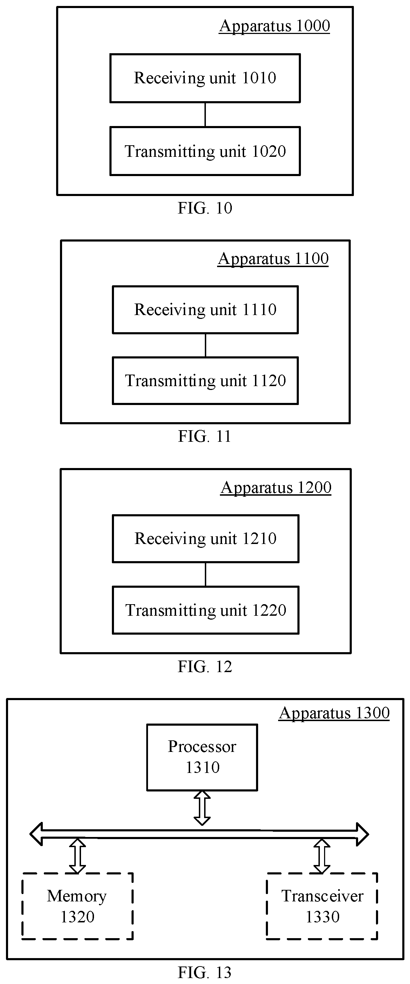

FIG. 10 is a schematic block diagram of another apparatus for wireless communication according to an embodiment of the present application. The apparatus 1000 may be a first network device corresponding to any first cell described above. The apparatus 1000 shown in FIG. 10 includes a receiving unit 1010 and a transmitting unit 1020.

The receiving unit 1010 may be configured to receive a first request sent by a first terminal device, or receive a second request sent by a second network device corresponding to a second cell, where the first request is used to request a first SIB of the first cell, and the second request is determined based on the first request. The first cell is a serving cell corresponding to the first terminal device, and the first SIB includes a SIB1 of the first cell.

The transmitting unit 1020 may be configured to send the first SIB and/or configuration information of the first SIB to the first terminal device.

Optionally, the first request includes one or more of the following manners: an uplink wake-up signal, on-demand information/on-demand signaling for requesting the first SIB, and a first sequence for requesting the first SIB, and a preamble index associated with the first SIB.

Optionally, whether the first cell is a NES cell is determined based on second information, and the second information includes one or more of the following: whether an SSB sent by the first cell includes an indication indicating that the first cell is a NES cell; whether an MIB sent by the first cell includes an indication indicating that the first cell is a NES cell; whether an SSB or MIB sent by the first cell includes the configuration information of the first SIB; and load of the first cell.

Optionally, the first request is sent by using an uplink channel of the first terminal device and/or a resource indicated by resource configuration information of the first request.

Optionally, the transmitting unit1020 is further configured to send a first SSB. The receiving unit 1010 is further configured to: when the first SSB does not include the resource configuration information of the first request, receive the first request by using a PRACH of the first terminal device; or when the first SSB includes the resource configuration information of the first request, receive the first request by using a PRACH of the first terminal device or the resource indicated by the resource configuration information.

Optionally, when the first request is sent by using a common resource of a random access procedure, the resource configuration information indicates one or more random access channel occasions ROs for sending the first request.

Optionally, the transmitting unit 1020 is further configured to send the resource configuration information and/or the configuration information of the first SIB to the second network device where the resource configuration information and/or the configuration information of the first SIB are/is used by the second cell to determine assistance information.

Optionally, the first cell is one of a plurality of cells, the plurality of cells include a plurality of NES cells and at least one non-NES cell, the second cell is the non-NES cell, and the plurality of NES cells include the first cell; and the plurality of NES cells respectively correspond to configuration information of a plurality of SIBs, and the configuration information of the plurality of SIBs reuses signaling sent by the second cell, or the configuration information of the plurality of SIBs is separately carried on different downlink channels.

Optionally, the transmitting unit 1020 is further configured to send the first SIB and/or the configuration information of the first SIB in a first time window, where a time parameter of the first time window is determined based on a transmission time of the first request.

Optionally, the first terminal device is in an idle state or an inactive state.

FIG. 11 is a schematic block diagram of still another apparatus for wireless communication according to an embodiment of the present application. The apparatus 1100 may be a second network device corresponding to any second cell described above. The apparatus 1100 shown in FIG. 11 includes a receiving unit 1110 and a transmitting unit 1120.

The receiving unit 1110 may be configured to receive a first request sent by a first terminal device, where the first request is used to request a first SIB of a first cell. The first cell is a serving cell corresponding to the first terminal device, and the first SIB includes a SIB1 of the first cell.

The transmitting unit 1120 may be configured to send configuration information of the first SIB to the first terminal device.

Optionally, the first request includes one or more of the following manners: an uplink wake-up signal, on-demand information/on-demand signaling for requesting the first SIB, and a first sequence for requesting the first SIB, and a preamble index associated with the first SIB.

Optionally, the transmitting unit 1120 is further configured to send a second request to a first network device corresponding to the first cell, where the second request is determined based on the first request.

Optionally, the receiving unit 1110 is further configured to receive resource configuration information of a plurality of first requests and configuration information of a plurality of SIBs that are sent by a plurality of network devices. A plurality of cells corresponding to the plurality of network devices are network energy saving NES cells, the second cell is a non-NES cell, and the plurality of network devices include the first network device corresponding to the first cell; and the resource configuration information of the plurality of first requests and the configuration information of the plurality of SIBs are used by the second network device to separately determine assistance information of the plurality of network devices.

Optionally, whether the first cell is a NES cell is determined based on second information, and the second information includes one or more of the following: whether an SSB sent by the first cell includes an indication indicating that the first cell is a NES cell; whether an MIB sent by the first cell includes an indication indicating that the first cell is a NES cell; whether an SSB or MIB sent by the first cell includes the configuration information of the first SIB; and load of the first cell.

Optionally, the configuration information of the plurality of SIBs reuses signaling sent by the second cell, or the configuration information of the plurality of SIBs is separately carried on different downlink channels.

Optionally, the first cell is one of a plurality of cells, the second cell is a non-NES cell, and the transmitting unit is further configured to send third information to the first terminal device. The third information includes identifier information of the plurality of cells, and the identifier information of the plurality of cells is used by the first terminal device to perform cell access and/or cell reselection.

Optionally, the first request is sent by using an uplink channel of the first terminal device and/or a resource indicated by resource configuration information of the first request.

Optionally, when the first request is sent by using a common resource of a random access procedure, the resource configuration information indicates one or more random access channel occasions ROs for sending the first request.

Optionally, the resource configuration information is determined based on assistance information sent by the first cell and/or the second cell.

Optionally, the transmitting unit is further configured to send the configuration information of the first SIB in a first time window, where a time parameter of the first time window is determined based on a transmission time of the first request.

Optionally, the first terminal device is in an idle state or an inactive state.

FIG. 12 is a schematic block diagram of still another apparatus for wireless communication according to an embodiment of the present application. The apparatus 1200 may be any of the foregoing second terminal devices. The apparatus 1200 shown in FIG. 12 includes a receiving unit 1210 and a transmitting unit 1220.

The receiving unit 1210 may be configured to receive a first request sent by a first terminal device, where the first request is used to request a first SIB of a first cell. The first cell is a serving cell corresponding to the first terminal device, and the first SIB includes a SIB1 of the first cell.

The transmitting unit 1220 may be configured to send configuration information of the first SIB to the first terminal device.

Optionally, the first request includes one or more of the following manners: on-demand information/on-demand signaling for requesting the first SIB; and a first sequence for requesting the first SIB.

Optionally, the first cell is a NES cell, and a cell in which the second terminal device is located is a non-NES cell.

Optionally, whether the first cell is a NES cell is determined based on second information, and the second information includes one or more of the following: whether an SSB sent by the first cell includes an indication indicating that the first cell is a NES cell; whether an MIB sent by the first cell includes an indication indicating that the first cell is a NES cell; whether an SSB or MIB sent by the first cell includes the configuration information of the first SIB; and load of the first cell.

Optionally, the transmitting unit is further configured to send the configuration information of the first SIB in a first time window, where a time parameter of the first time window is determined based on a transmission time of the first request.

Optionally, the first terminal device is in an idle state or an inactive state.

FIG. 13 is a schematic structural diagram of a communication apparatus according to an embodiment of the present application. Dashed lines in FIG. 13 indicate that a unit or module is optional. The apparatus 1300 may be configured to implement the method described in the foregoing method embodiment. The apparatus 1300 may be a chip, a terminal device, or a network device.

The apparatus 1300 may include one or more processors 1310. The processor 1310 may support the apparatus 1300 in implementing the method described in the foregoing method embodiment. The processor 1310 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1300 may further include one or more memories 1320. The memory 1320 stores a program, and the program may be executed by the processor 1310, so that the processor 1310 executes the method described in the foregoing method embodiment. The memory 1320 may be separate from the processor 1310 or may be integrated into the processor 1310.

The apparatus 1300 may further include a transceiver 1330. The processor 1310 may communicate with another device or chip through the transceiver 1330. For example, the processor 1310 may transmit data to and receive data from another device or chip through the transceiver 1330.

An embodiment of the present application further provides a computer-readable storage medium for storing a program. The computer-readable storage medium may be applied to the terminal device or the network device provided in embodiments of the present application, and the program causes a computer to execute a method executed by the terminal device or the network device in various embodiments of the present application.

The computer-readable storage medium may be any available medium accessible by a computer or a data storage device such as a server or a data center that integrates one or more available media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

An embodiment of the present application further provides a computer program product. The computer program product includes a program. The computer program product may be applied to the terminal device or the network device provided in embodiments of the present application, and the program causes a computer to execute a method executed by the terminal device or the network device in various embodiments of the present application.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of the present application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (such as a coaxial cable, an optical fiber, and a digital subscriber line (digital subscriber line, DSL)) manner or a wireless (such as infrared, wireless, and microwave) manner.

An embodiment of the present application further provides a computer program. The computer program may be applied to the terminal device or the network device provided in embodiments of the present application, and the computer program causes a computer to execute the methods executed by the terminal device or the network device in various embodiments of the present application.

The terms "system" and "network" in the present application may be used interchangeably. In addition, the terms used in the present application are merely used to explain the specific embodiments of the present application, and are not intended to limit the present application. The terms "first", "second", "third", "fourth", and the like in the specification, claims, and drawings of the present application are intended to distinguish between different objects, rather than to describe a specific order. In addition, the terms "include" and "have" and any variations thereof are intended to cover a non-exclusive inclusion.

In embodiments of the present application, "indicate" mentioned herein may be a direct indication, or may be an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In embodiments of the present application, the term "corresponding" may mean that there is a direct or indirect correspondence between two elements, or that there is an association between two elements, or that there is a relationship of "indicating" and "being indicated", "configuring" and "being configured", or the like.

In embodiments of the present application, "pre-defining" or "pre-configuring" can be implemented by pre-storing corresponding codes, tables, or other forms that may be used to indicate related information in devices (for example, including a terminal device and a network device). A specific implementation thereof is not limited in the present application. For example, being pre-defined may refer to being defined in a protocol.

In embodiments of the present application, the "protocol" may indicate a standard protocol in the communication field, which may include, for example, an LTE protocol, an NR protocol, and a related protocol applied to a future communication system. This is not limited in the present application.

In embodiments of the present application, determining B based on A does not mean determining B based on only A, but instead B may be determined based on A and/or other information.

In embodiments of the present application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of the present application, sequence numbers of the foregoing processes do not mean execution orders. The execution orders of the processes should be determined based on functions and internal logic of the processes, and should not be construed as any limitation on the implementation processes of embodiments of the present application.

In several embodiments provided in the present application, it should be understood that, the disclosed system, apparatus, and method may be implemented in other manners. For example, the foregoing described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, functional units in embodiments of the present application may be integrated into one processing unit, or each of the units may exist alone physically, or two or more units may be integrated into one unit.

The foregoing descriptions are merely specific implementations of the present application, but the protection scope of the present application is not limited thereto. Any variation or replacement readily figured out by a person skilled in the art within the technical scope disclosed in the present application shall fall within the protection scope of the present application. Therefore, the protection scope of the present application shall be subject to the protection scope of the claims.

## Claims

1. A method for wireless communication, comprising:
sending, by a first terminal device, a first request, wherein the first request is used to request a first system information block SIB of a first cell; and
receiving, by the first terminal device, the first SIB and/or configuration information of the first SIB,
wherein the first cell is a serving cell corresponding to the first terminal device, and the first SIB comprises a SIB1 of the first cell.

2. The method according to claim 1, wherein the first request comprises one or more of the following manners:
an uplink wake-up signal;
on-demand information/on-demand signaling for requesting the first SIB;
a first sequence for requesting the first SIB; or
a preamble index related to the first SIB.

3. The method according to claim 1 or 2, wherein the method further comprises:
determining, by the first terminal device, that the first cell is a network energy saving NES cell; and
sending, by the first terminal device, the first request to the first cell.

4. The method according to claim 1 or 2, wherein the first cell is one of a plurality of cells, the plurality of cells further comprise a second cell, and the method further comprises:
sending, by the first terminal device, the first request to the second cell; and
receiving, by the first terminal device, the configuration information of the first SIB sent by the first cell and/or the second cell.

5. The method according to claim 4, wherein the plurality of cells comprise a plurality of NES cells and at least one non-NES cell, the second cell is the non-NES cell, and the plurality of NES cells comprise the first cell; and the plurality of NES cells respectively correspond to configuration information of a plurality of SIBs, and the configuration information of the plurality of SIBs reuses signaling sent by the second cell, or the configuration information of the plurality of SIBs is separately carried on different downlink channels.

6. The method according to claim 4 or 5, wherein the method further comprises:
when the first terminal device receives the configuration information of the first SIB sent by the first cell and the configuration information of the first SIB sent by the second cell, selecting, by the first terminal device based on first information, configuration information of the first SIB used for accessing the first cell.

7. The method according to claim 6, wherein the first information comprises one or more of the following:
a service level of the first terminal device;
a service time of the first terminal device; or
a measurement result of the first terminal device.

8. The method according to any one of claims 4 to 7, wherein the method further comprises:
receiving, by the first terminal device, third information sent by the second cell,
wherein the third information comprises identifier information of the plurality of cells, and the identifier information of the plurality of cells is used by the first terminal device to perform cell access and/or cell reselection.

9. The method according to claim 1 or 2, wherein the method further comprises:
sending, by the first terminal device, the first request to a second terminal device; and
receiving, by the first terminal device, the configuration information of the first SIB sent by the second terminal device,
wherein a cell in which the second terminal device is located is a non-NES cell.

10. The method according to claim 9, wherein the method further comprises:
sending, by the first terminal device, the configuration information of the first SIB to a third terminal device located in the first cell.

11. The method according to any one of claims 1 to 10, wherein the method further comprises:
determining, by the first terminal device based on second information, whether the first cell is a NES cell; and
sending, by the first terminal device, the first request when the first cell is a NES cell.

12. The method according to claim 11, wherein the second information comprises one or more of the following:
whether a synchronization signal block SSB sent by the first cell comprises an indication indicating that the first cell is a NES cell;
whether a master information block MIB sent by the first cell comprises an indication indicating that the first cell is a NES cell;
whether an SSB or MIB sent by the first cell comprises the configuration information of the first SIB; or
load of the first cell.

13. The method according to any one of claims 1 to 12, wherein the first request is sent by using an uplink channel of the first terminal device and/or a resource indicated by resource configuration information of the first request.

14. The method according to claim 13, wherein the method further comprises:
receiving, by the first terminal device, a first SSB sent by the first cell; and
when the first SSB does not comprise the resource configuration information, sending, by the first terminal device, the first request by using a physical random access channel PRACH; or
when the first SSB comprises the resource configuration information, sending, by the first terminal device, the first request by using a PRACH or by using the resource indicated by the resource configuration information.

15. The method according to claim 13, wherein when the first request is sent by using a common resource of a random access procedure, the resource configuration information indicates one or more random access channel occasions ROs for sending the first request.

16. The method according to any one of claims 13 to 15, wherein the first cell is one of the plurality of cells, the plurality of cells further comprise a second cell, and the resource configuration information is determined based on assistance information sent by the first cell and/or the second cell.

17. The method according to claim 16, wherein the resource configuration information comprises first configuration information sent by the first cell and second configuration information sent by the second cell, and the method further comprises:
when the first configuration information is different from the second configuration information, sending, by the first terminal device, the first request based on the first configuration information; or
when the first configuration information is different from the second configuration information, selecting, by the first terminal device from the first configuration information and the second configuration information based on a service type, configuration information for sending the first request.

18. The method according to any one of claims 1 to 17, wherein the method further comprises:
monitoring, by the first terminal device, the first SIB and/or the configuration information of the first SIB in a first time window,
wherein a time parameter of the first time window is determined based on a transmission time of the first request.

19. The method according to any one of claims 1 to 18, wherein the first terminal device is in an idle state or an inactive state.

20. A method for wireless communication, comprising:
receiving, by a first network device corresponding to a first cell, a first request sent by a first terminal device, or receiving a second request sent by a second network device corresponding to a second cell, wherein the first request is used to request a first system information block SIB of the first cell, and the second request is determined based on the first request; and
sending, by the first network device, the first SIB and/or configuration information of the first SIB to the first terminal device,
wherein the first cell is a serving cell corresponding to the first terminal device, and the first SIB comprises a SIB1 of the first cell.

21. The method according to claim 20, wherein the first request comprises one or more of the following manners:
an uplink wake-up signal;
on-demand information/on-demand signaling for requesting the first SIB;
a first sequence for requesting the first SIB; or
a preamble index related to the first SIB.

22. The method according to claim 20 or 21, wherein whether the first cell is a network energy saving NES cell is determined based on second information, wherein the second information comprises one or more of the following:
whether a synchronization signal block SSB sent by the first cell comprises an indication indicating that the first cell is a NES cell;
whether a master information block MIB sent by the first cell comprises an indication indicating that the first cell is a NES cell;
whether an SSB or MIB sent by the first cell comprises the configuration information of the first SIB; or
load of the first cell.

23. The method according to any one of claims 20 to 22, wherein the first request is sent by using an uplink channel of the first terminal device and/or a resource indicated by resource configuration information of the first request.

24. The method according to claim 23, wherein the method further comprises:
sending, by the first network device, a first SSB; and
when the first SSB does not comprise the resource configuration information of the first request, receiving, by the first network device, the first request by using a physical random access channel PRACH of the first terminal device; or
when the first SSB comprises the resource configuration information of the first request, receiving, by the first network device, the first request by using a PRACH of the first terminal device or the resource indicated by the resource configuration information.

25. The method according to claim 23, wherein when the first request is sent by using a common resource of a random access procedure, the resource configuration information indicates one or more random access channel occasions ROs for sending the first request.

26. The method according to any one of claims 23 to 25, wherein the method further comprises:
sending, by the first network device, the resource configuration information and/or the configuration information of the first SIB to the second network device,
wherein the resource configuration information and/or the configuration information of the first SIB are/is used by the second cell to determine assistance information.

27. The method according to any one of claims 20 to 26, wherein the first cell is one of a plurality of cells, the plurality of cells comprise a plurality of NES cells and at least one non-NES cell, the second cell is the non-NES cell, and the plurality of NES cells comprise the first cell; and the plurality of NES cells respectively correspond to configuration information of a plurality of SIBs, and the configuration information of the plurality of SIBs reuses signaling sent by the second cell, or the configuration information of the plurality of SIBs is separately carried on different downlink channels.

28. The method according to any one of claims 20 to 27, wherein the method further comprises:
sending, by the first network device, the first SIB and/or the configuration information of the first SIB in a first time window,
wherein the time parameter of the first time window is determined based on a transmission time of the first request.

29. The method according to any one of claims 20 to 28, wherein the first terminal device is in an idle state or an inactive state.

30. A method for wireless communication, comprising:
receiving, by a second network device corresponding to a second cell, a first request sent by a first terminal device, wherein the first request is used to request a first system information block SIB of the first cell; and
sending, by the second network device, configuration information of the first SIB to the first terminal device,
wherein the first cell is a serving cell corresponding to the first terminal device, and the first SIB comprises a SIB1 of the first cell.

31. The method according to claim 30, wherein the first request comprises one or more of the following manners:
an uplink wake-up signal;
on-demand information/on-demand signaling for requesting the first SIB;
a first sequence for requesting the first SIB; or
a preamble index related to the first SIB.

32. The method according to claim 30 or 31, wherein the method further comprises:
sending, by the second network device, a second request to a first network device corresponding to the first cell, wherein the second request is determined based on the first request.

33. The method according to any one of claims 30 to 32, wherein the method further comprises:
receiving, by the second network device, resource configuration information of a plurality of first requests and configuration information of a plurality of SIBs that are sent by a plurality of network devices,
wherein a plurality of cells corresponding to the plurality of network devices are network energy saving NES cells, the second cell is a non-NES cell, and the plurality of network devices comprise the first network device corresponding to the first cell; and the resource configuration information of the plurality of first requests and/or the configuration information of the plurality of SIBs are/is used by the second network device to separately determine assistance information of the plurality of network devices.

34. The method according to claim 33, wherein whether the first cell is a NES cell is determined based on second information, and the second information comprises one or more of the following:
whether a synchronization signal block SSB sent by the first cell comprises an indication indicating that the first cell is a NES cell;
whether a master information block MIB sent by the first cell comprises an indication indicating that the first cell is a NES cell;
whether an SSB or MIB sent by the first cell comprises the configuration information of the first SIB; or
load of the first cell.

35. The method according to claim 33 or 34, wherein the configuration information of the plurality of SIBs reuses signaling sent by the second cell, or the configuration information of the plurality of SIBs is separately carried on different downlink channels.

36. The method according to any one of claims 30 to 35, wherein the first cell is one of a plurality of cells, the second cell is a non-NES cell, and the method further comprises:
sending, by the second network device, third information to the first terminal device,
wherein the third information comprises identifier information of the plurality of cells, and the identifier information of the plurality of cells is used by the first terminal device to perform cell access and/or cell reselection.

37. The method according to any one of claims 30 to 36, wherein the first request is sent by using an uplink channel of the first terminal device and/or a resource indicated by resource configuration information of the first request.

38. The method according to claim 37, wherein when the first request is sent by using a common resource of a random access procedure, the resource configuration information indicates one or more random access channel occasions ROs for sending the first request.

39. The method according to claim 37 or 38, wherein the resource configuration information is determined based on assistance information sent by the first cell and/or the second cell.

40. The method according to any one of claims 30 to 39, wherein the method further comprises:
sending, by the second network device, the configuration information of the first SIB in a first time window,
wherein a time parameter of the first time window is determined based on a transmission time of the first request.

41. The method according to any one of claims 30 to 40, wherein the first terminal device is in an idle state or an inactive state.

42. A method for wireless communication, comprising:
receiving, by a second terminal device, a first request sent by a first terminal device, wherein the first request is used to request a first system information block SIB of a first cell; and
sending, by the second terminal device, configuration information of the first SIB to the first terminal device,
wherein the first cell is a serving cell corresponding to the first terminal device, and the first SIB comprises a SIB1 of the first cell.

43. The method according to claim 42, wherein the first request comprises one or more of the following manners:
on-demand information/on-demand signaling for requesting the first SIB; or
a first sequence for requesting the first SIB.

44. The method according to claim 42 or 43, wherein the first cell is a network energy saving NES cell, and a cell in which the second terminal device is located is a non-NES cell.

45. The method according to any one of claims 42 to 44, wherein whether the first cell is a NES cell is determined based on second information, wherein the second information comprises one or more of the following:
whether a synchronization signal block SSB sent by the first cell comprises an indication indicating that the first cell is a NES cell;
whether a master information block MIB sent by the first cell comprises an indication indicating that the first cell is a NES cell;
whether an SSB or MIB sent by the first cell comprises the configuration information of the first SIB; or
load of the first cell.

46. The method according to any one of claims 42 to 45, wherein the method further comprises:
sending, by the second terminal device, the configuration information of the first SIB in a first time window,
wherein a time parameter of the first time window is determined based on a transmission time of the first request.

47. The method according to any one of claims 42 to 46, wherein the first terminal device is in an idle state or an inactive state.

48. An apparatus for wireless communication, wherein the apparatus is a first terminal device, and the apparatus comprises:
a transmitting unit, sending a first request, wherein the first request is used to request a first system information block SIB of a first cell; and
a receiving unit, receiving the first SIB and/or configuration information of the first SIB,
wherein the first cell is a serving cell corresponding to the first terminal device, and the first SIB comprises a SIB1 of the first cell.

49. The apparatus according to claim 48, wherein the first request comprises one or more of the following manners:
an uplink wake-up signal;
on-demand information/on-demand signaling for requesting the first SIB;
a first sequence for requesting the first SIB; or
a preamble index related to the first SIB.

50. The apparatus according to claim 48 or 49, wherein the apparatus further comprises:
a first determining unit, determining that the first cell is a network energy saving NES cell,
wherein the transmitting unit is further configured to send the first request to the first cell.

51. The apparatus according to claim 48 or 49, wherein the first cell is one of a plurality of cells, the plurality of cells further comprise a second cell, and the transmitting unit is further configured to send the first request to the second cell; and the receiving unit is further configured to receive the configuration information of the first SIB sent by the first cell and/or the second cell.

52. The apparatus according to claim 51, wherein the plurality of cells comprise a plurality of NES cells and at least one non-NES cell, the second cell is the non-NES cell, and the plurality of NES cells comprise the first cell; and the plurality of NES cells respectively correspond to configuration information of a plurality of SIBs, and the configuration information of the plurality of SIBs reuses signaling sent by the second cell, or the configuration information of the plurality of SIBs is separately carried on different downlink channels.

53. The apparatus according to claim 51 or 52, wherein the apparatus further comprises:
a processing unit, when the first terminal device receives the configuration information of the first SIB sent by the first cell and the configuration information of the first SIB sent by the second cell, selecting, based on first information, configuration information of the first SIB used for accessing the first cell.

54. The apparatus according to claim 53, wherein the first information comprises one or more of the following:
a service level of the first terminal device;
a service time of the first terminal device; or
a measurement result of the first terminal device.

55. The apparatus according to any one of claims 51 to 54, wherein the receiving unit is further configured to receive third information sent by the second cell, wherein the third information comprises identifier information of the plurality of cells, and the identifier information of the plurality of cells is used by the first terminal device to perform cell access and/or cell reselection.

56. The apparatus according to claim 48 or 49, wherein the transmitting unit is further configured to send the first request to a second terminal device; and the receiving unit is further configured to receive the configuration information of the first SIB sent by the second terminal device, wherein a cell in which the second terminal device is located is a non-NES cell.

57. The apparatus according to claim 56, wherein the transmitting unit is further configured to send the configuration information of the first SIB to a third terminal device located in the first cell.

58. The apparatus according to any one of claims 48 to 57, wherein the apparatus further comprises:
a second determining unit, determining, based on second information, whether the first cell is a NES cell,
wherein the transmitting unit is further configured to send the first request when the first cell is a NES cell.

59. The apparatus according to claim 58, wherein the second information comprises one or more of the following:
whether a synchronization signal block SSB sent by the first cell comprises an indication indicating that the first cell is a NES cell;
whether a master information block MIB sent by the first cell comprises an indication indicating that the first cell is a NES cell;
whether an SSB or MIB sent by the first cell comprises the configuration information of the first SIB; or
load of the first cell.

60. The apparatus according to any one of claims 48 to 59, wherein the first request is sent by using an uplink channel of the first terminal device and/or a resource indicated by resource configuration information of the first request.

61. The apparatus according to claim 60, wherein the receiving unit is further configured to receive the first SSB sent by the first cell; and the transmitting unit is further configured to:
when the first SSB does not comprise the resource configuration information, send the first request by using a physical random access channel PRACH; or
when the first SSB comprises the resource configuration information, send the first request by using a PRACH or by using the resource indicated by the resource configuration information.

62. The apparatus according to claim 61, wherein when the first request is sent by using a common resource of a random access procedure, the resource configuration information indicates one or more random access channel occasions ROs used for sending the first request.

63. The apparatus according to any one of claims 60 to 62, wherein the first cell is one of the plurality of cells, the plurality of cells further comprise a second cell, and the resource configuration information is determined based on assistance information sent by the first cell and/or the second cell.

64. The apparatus according to claim 63, wherein the resource configuration information comprises first configuration information sent by the first cell and second configuration information sent by the second cell, and the transmitting unit is further configured to:
when the first configuration information is different from the second configuration information, send the first request based on the first configuration information; or
when the first configuration information is different from the second configuration information, select, from the first configuration information and the second configuration information based on a service type, configuration information for sending the first request.

65. The apparatus according to any one of claims 48 to 64, wherein the receiving unit is further configured to monitor the first SIB and/or the configuration information of the first SIB in a first time window, wherein a time parameter of the first time window is determined based on a transmission time of the first request.

66. The apparatus according to any one of claims 48 to 65, wherein the first terminal device is in an idle state or an inactive state.

67. An apparatus for wireless communication, wherein the apparatus is a first network device corresponding to a first cell, and the apparatus comprises:
a receiving unit, receiving a first request sent by a first terminal device, or receiving a second request sent by a second network device corresponding to a second cell, wherein the first request is used to request a first system information block SIB of the first cell, and the second request is determined based on the first request; and
a transmitting unit, sending the first SIB and/or configuration information of the first SIB to the first terminal device,
wherein the first cell is a serving cell corresponding to the first terminal device, and the first SIB comprises a SIB1 of the first cell.

68. The apparatus according to claim 67, wherein the first request comprises one or more of the following manners:
an uplink wake-up signal;
on-demand information/on-demand signaling for requesting the first SIB;
a first sequence for requesting the first SIB; or
a preamble index related to the first SIB.

69. The apparatus according to claim 67 or 68, wherein whether the first cell is a network energy saving NES cell is determined based on second information, wherein the second information comprises one or more of the following:
whether a synchronization signal block SSB sent by the first cell comprises an indication indicating that the first cell is a NES cell;
whether a master information block MIB sent by the first cell comprises an indication indicating that the first cell is a NES cell;
whether an SSB or MIB sent by the first cell comprises the configuration information of the first SIB; or
load of the first cell.

70. The apparatus according to any one of claims 67 to 69, wherein the first request is sent by using an uplink channel of the first terminal device and/or a resource indicated by resource configuration information of the first request.

71. The apparatus according to claim 70, wherein the transmitting unit is further configured to send a first SSB; and
the receiving unit is further configured to:
when the first SSB does not comprise the resource configuration information of the first request, receive the first request by using a physical random access channel PRACH of the first terminal device; or
when the first SSB comprises the resource configuration information of the first request, receive the first request by using a PRACH of the first terminal device or the resource indicated by the resource configuration information.

72. The apparatus according to claim 70, wherein when the first request is sent by using a common resource of a random access procedure, the resource configuration information indicates one or more random access channel occasions ROs used for sending the first request.

73. The apparatus according to any one of claims 70 to 72, wherein the transmitting unit is further configured to send the resource configuration information and/or the configuration information of the first SIB to the second network device, wherein the resource configuration information and/or the configuration information of the first SIB are/is used by the second cell to determine assistance information.

74. The apparatus according to any one of claims 67 to 73, wherein the first cell is one of a plurality of cells, the plurality of cells comprise a plurality of NES cells and at least one non-NES cell, the second cell is the non-NES cell, and the plurality of NES cells comprise the first cell; and the plurality of NES cells respectively correspond to configuration information of a plurality of SIBs, and the configuration information of the plurality of SIBs reuses signaling sent by the second cell, or the configuration information of the plurality of SIBs is separately carried on different downlink channels.

75. The apparatus according to any one of claims 67 to 74, wherein the transmitting unit is further configured to send the first SIB and/or the configuration information of the first SIB in a first time window, wherein a time parameter of the first time window is determined based on a transmission time of the first request.

76. The apparatus according to any one of claims 67 to 75, wherein the first terminal device is in an idle state or an inactive state.

77. An apparatus for wireless communication, wherein the apparatus is a second network device corresponding to a second cell, and the apparatus comprises:
a receiving unit, receiving a first request sent by a first terminal device, wherein the first request is used to request a first system information block SIB of a first cell; and
a transmitting unit, sending configuration information of the first SIB to the first terminal device,
wherein the first cell is a serving cell corresponding to the first terminal device, and the first SIB comprises a SIB1 of the first cell.

78. The apparatus according to claim 77, wherein the first request comprises one or more of the following manners:
an uplink wake-up signal;
on-demand information/on-demand signaling for requesting the first SIB;
a first sequence for requesting the first SIB; or
a preamble index related to the first SIB.

79. The apparatus according to claim 77 or 78, wherein the transmitting unit is further configured to send a second request to a first network device corresponding to the first cell, wherein the second request is determined based on the first request.

80. The apparatus according to any one of claims 77 to 79, wherein the receiving unit is further configured to receive resource configuration information of a plurality of first requests and configuration information of a plurality of SIBs that are sent by a plurality of network devices, wherein a plurality of cells corresponding to the plurality of network devices are network energy saving NES cells, the second cell is a non-NES cell, and the plurality of network devices comprise the first network device corresponding to the first cell; and the resource configuration information of the plurality of first requests and/or the configuration information of the plurality of SIBs are/is used by the second network device to separately determine assistance information of the plurality of network devices.

81. The apparatus according to claim 80, wherein whether the first cell is a NES cell is determined based on second information, and the second information comprises one or more of the following:
whether a synchronization signal block SSB sent by the first cell comprises an indication indicating that the first cell is a NES cell;
whether a master information block MIB sent by the first cell comprises an indication indicating that the first cell is a NES cell;
whether an SSB or MIB sent by the first cell comprises the configuration information of the first SIB; or
load of the first cell.

82. The apparatus according to claim 80 or 81, wherein the configuration information of the plurality of SIBs reuses signaling sent by the second cell, or the configuration information of the plurality of SIBs is separately carried on different downlink channels.

83. The apparatus according to any one of claims 77 to 82, wherein the first cell is one of a plurality of cells, the second cell is a non-NES cell, and the transmitting unit is further configured to send third information to the first terminal device, wherein the third information comprises identifier information of the plurality of cells, and the identifier information of the plurality of cells is used by the first terminal device to perform cell access and/or cell reselection.

84. The apparatus according to any one of claims 77 to 83, wherein the first request is sent by using an uplink channel of the first terminal device and/or a resource indicated by resource configuration information of the first request.

85. The apparatus according to claim 84, wherein when the first request is sent by using a common resource of a random access procedure, the resource configuration information indicates one or more random access channel occasions ROs used for sending the first request.

86. The apparatus according to claim 84 or 85, wherein the resource configuration information is determined based on assistance information sent by the first cell and/or the second cell.

87. The apparatus according to any one of claims 77 to 86, wherein the transmitting unit is further configured to send the configuration information of the first SIB in a first time window, wherein a time parameter of the first time window is determined based on a transmission time of the first request.

88. The apparatus according to any one of claims 77 to 87, wherein the first terminal device is in an idle state or an inactive state.

89. An apparatus for wireless communication, wherein the apparatus is a second terminal device, and the apparatus comprises:
a receiving unit, receiving a first request sent by a first terminal device, wherein the first request is used to request a first system information block SIB of a first cell; and
a transmitting unit, sending configuration information of the first SIB to the first terminal device,
wherein the first cell is a serving cell corresponding to the first terminal device, and the first SIB comprises a SIB1 of the first cell.

90. The apparatus according to claim 89, wherein the first request comprises one or more of the following manners:
on-demand information/on-demand signaling for requesting the first SIB; or
a first sequence for requesting the first SIB.

91. The apparatus according to claim 89 or 90, wherein the first cell is a network energy saving NES cell, and a cell in which the second terminal device is located is a non-NES cell.

92. The apparatus according to any one of claims 89 to 91, wherein whether the first cell is a NES cell is determined based on second information, wherein the second information comprises one or more of the following:
whether a synchronization signal block SSB sent by the first cell comprises an indication indicating that the first cell is a NES cell;
whether a master information block MIB sent by the first cell comprises an indication indicating that the first cell is a NES cell;
whether an SSB or MIB sent by the first cell comprises the configuration information of the first SIB; or
load of the first cell.

93. The apparatus according to any one of claims 89 to 92, wherein the transmitting unit is further configured to send the configuration information of the first SIB in a first time window, wherein a time parameter of the first time window is determined based on a transmission time of the first request.

94. The apparatus according to any one of claims 89 to 93, wherein the first terminal device is in an idle state or an inactive state.

95. A communication apparatus, comprising a memory and a processor, wherein the memory is configured to store a program, and the processor is configured to invoke the program in the memory to execute the method according to any one of claims 1 to 47.

96. An apparatus, comprising a processor invoking a program from a memory to execute the method according to any one of claims 1 to 47.

97. A chip, comprising a processor configured to invoke a program from a memory, to cause a device installed with the chip to execute the method according to any one of claims 1 to 47.

98. A computer-readable storage medium, wherein a program is stored on the computer-readable storage medium, and the program causes a computer to execute the method according to any one of claims 1 to 47.

99. A computer program product, comprising a program, wherein the program causes a computer to execute the method according to any one of claims 1 to 47.

100. A computer program, wherein the computer program causes a computer to execute the method according to any one of claims 1 to 47.
